(19) Europäisches Patentamt
European Patent Office
Office européen des brevets

(11) **EP 4 273 512 A1**

(12) **EUROPÄISCHE PATENTANMELDUNG**

(43) Veröffentlichungstag:
**08.11.2023 Patentblatt 2023/45**

(21) Anmeldenummer: 23168855.7

(22) Anmeldetag: **20.04.2023**

(51) Internationale Patentklassifikation (IPC):
**G01F 1/66** (2022.01)     **G01F 1/667** (2022.01)
**G01F 15/00** (2006.01)     **F15D 1/00** (2006.01)
**F15D 1/02** (2006.01)     **G01F 15/18** (2006.01)

(52) Gemeinsame Patentklassifikation (CPC):
**G01F 1/662; G01F 1/667; G01F 15/00;**
**G01F 15/18;** F15D 1/025

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **04.05.2022 EP 22171494**

(71) Anmelder: **Levitronix GmbH**
**8048 Zürich (CH)**

(72) Erfinder:
• **Bober, Maciej**
**86929 Penzing (DE)**
• **Hoffmann, Edgar**
**86928 Hofstetten (DE)**

(74) Vertreter: **IPS Irsch AG**
**Langfeldstrasse 88**
**8500 Frauenfeld (CH)**

(54) **ULTRASCHALL-MESSSYSTEM UND MESSRÖHRE FÜR EIN SOLCHES**

(57)     Es wird ein Ultraschall-Messsystem zur Messung an einem in einer Leitung strömenden Fluid vorgeschlagen, mit einer Messröhre (100), welche von dem Fluid in einer Strömungsrichtung (A) durchströmbar ist, sowie mit einer Ultraschall-Messvorrichtung (10), welche zur Ermittlung eines Durchflusses des Fluids durch die Messröhre (100) ausgestaltet ist, wobei die Ultraschall-Messvorrichtung (10) einen ersten Ultraschallwandler (11) und einen zweiten Ultraschallwandler (22) umfasst, die eine Messstrecke festlegen, wobei die Ultraschallwandler (11, 22) derart angeordnet und ausgerichtet sind, dass sie Messsignale (12, 21) entlang der Messstrecke miteinander austauschen können, und wobei die Messröhre (100) bezüglich der Ultraschall-Messvorrichtung (10) so angeordnet ist, dass die Messstrecke durch die Messröhre (100) verläuft. Stromaufwärts der Messstrecke ist eine Konditionierungseinrichtung (7) zum Einwirken auf das Fluid vorgesehen, wobei die Konditionierungseinrichtung (7) derart ausgestaltet ist, dass sie eine laminare Strömung des Fluids in eine Strömung umwandelt, welche entlang der Messstrecke turbulent ist. Ferner wird eine Messröhre (100) für ein solches Ultraschall-Messsystem vorgeschlagen.

Fig.1

EP 4 273 512 A1

**Beschreibung**

Die Erfindung betrifft ein Ultraschall-Messsystem zur Messung an einem in einer Leitung strömenden Fluid sowie eine Messröhre für ein solches Ultraschall-Messsystem gemäss dem Oberbegriff des unabhängigen Anspruchs der jeweiligen Kategorie.

In der Verfahrenstechnik werden für die Untersuchung von Fluiden oder für die Messung an Fluiden, die in Leitungen, beispielsweise einem flexiblen Kunststoffschlauch, strömen, nicht-invasive Methoden eingesetzt. Dies ist insbesondere bei solchen hochreinen oder sehr empfindlichen Fluiden der Fall, bei denen ein Kontakt zwischen dem Fluid und der Messvorrichtung so weit wie möglich vermieden werden soll, beispielsweise, damit das Fluid nicht kontaminiert wird. Als Beispiele seien hier die Pharmaindustrie und die biotechnologische Industrie genannt. Hier werden häufig Lösungen und Suspensionen hergestellt und gefördert, die eine sehr hohe Anforderung an die Reinheit und/oder an die Unversehrtheit des Fluids stellen. Häufig müssen derartige Fluide sogar unter sterilen Bedingungen behandelt werden.

Als nicht-invasive Methode zur Messung an Fluiden, die in Leitungen strömen, hat sich insbesondere die Ultraschall-Messtechnik bewährt. Ultraschall-Messsysteme zur Messung an einem in einer Leitung strömenden Fluid werden beispielsweise eingesetzt, um den Durchfluss des Fluids durch eine Leitung zu bestimmen. Das Ultraschall-Messsystem umfasst dabei eine Ultraschall-Messvorrichtung mit typischerweise mehreren Ultraschallwandlern, welche das Fluid mit UltraschallSignalen beaufschlagen und Ultraschall-Signale empfangen können.

Es sind Inline Ultraschall-Messsysteme bekannt, womit Messsysteme bezeichnet werden, bei denen Teile des Ultraschall-Messsystems, beispielsweise eine separate Messröhre, in die von dem Fluid durchströmte Leitung eingebracht werden, z.B. derart, dass eine separate Messröhre vorgesehen ist, deren Enden mit der Leitung verbunden werden, sodass das Fluid aus der Leitung in die Messröhre strömt, die Messröhre durchströmt, und an deren anderen Ende wieder in die Leitung strömt. Die Ultraschallmessung erfolgt dann im Bereich der Messröhre. Dabei sind auch Anordnungen bekannt, bei denen sich die Messstrecke, d.h. die Strecke entlang welcher die Ultraschallwandler Signale miteinander austauschen, parallel zur Strömungsrichtung des Fluids in der Messröhre erstreckt. Bei einer solchen Anordnung werden typischerweise Messsignale ausgesendet und erfasst, die sich in Strömungsrichtung des Fluids ausbreiten, und Messsignale, die sich entgegengesetzt zur Strömungsrichtung ausbreiten. Aus der Laufzeitdifferenz solcher Messsignale lässt sich dann der Durchfluss des Fluids ermitteln. Ein derartiges Ultraschall-Messsystem mit einer von dem Fluid durchströmten Messröhre ist beispielsweise in der EP 3 770 561 A1 beschrieben.

Ferner sind Ultraschall-Messsysteme bekannt, bei denen die Ultraschall-Messvorrichtung als Klemmvorrichtung ausgestaltet ist. Solche Vorrichtungen werden auch als "Clamp-on" Vorrichtungen bezeichnet. Eine solche Klemmvorrichtung ist derart ausgestaltet, dass sie auf eine flexible Leitung aufgeklemmt werden kann, bzw. dass die Leitung von der Messvorrichtung eingeklemmt wird. Die Leitung mit dem darin strömenden Fluid wird dann mit Ultraschallsignalen beaufschlagt. Nach Durchlaufen der Leitung und des Fluids werden die Ultraschallsignale von einem Ultraschallwandler empfangen und das empfangene Signal ausgewertet.

Für die Bestimmung des Durchflusses ist es eine bekannte Massnahme, dass die Ultraschall-Messvorrichtung mindestens zwei Ultraschallwandler umfasst, welche im Betriebszustand lateral an gegenüberliegenden Seiten der Leitung angeordnet sind. Die beiden Ultraschallwandler sind bezüglich der Strömungsrichtung des Fluids zueinander versetzt angeordnet und dabei so ausgerichtet, dass der erste Ultraschallwandler ein von dem zweiten Ultraschallwandler gesendetes Signal empfangen kann, und der zweite Ultraschallwandler ein von dem ersten Ultraschallwandler gesendetes Signal empfangen kann. Durch den Versatz zueinander sind dabei die beiden Ultraschallwandler so ausgerichtet, dass sie ihre Ultraschallsignale jeweils schräg zur Strömungsrichtung des Fluids aussenden, wobei der eine Ultraschallwandler das Signal schräg mit der Strömungsrichtung aussendet, während der andere Ultraschallwandler das Signal schräg gegen die Strömungsrichtung aussendet. Nun wird mit dem ersten Ultraschallwandler ein Messsignal ausgesendet, das von dem zweiten Ultraschallwandler empfangen wird, und dann wird von dem zweiten Ultraschallwandler ein Messsignal ausgesendet, das von dem ersten Ultraschallwandler ausgesendet wird.

Das schräg in Strömungsrichtung ausgesendete Messsignal wird in der Strömung beschleunigt und das schräg gegen die Strömungsrichtung ausgesendete Messignal wird durch die Strömung abgebremst. Die Laufzeitdifferenz der beiden Messsignale ist proportional zur Strömungsgeschwindigkeit des Fluids, sodass sich aus dieser Laufzeitdifferenz der Durchfluss durch die flexible Leitung ermitteln lässt.

Ultraschall-Messvorrichtungen, die als Klemmvorrichtung ausgestaltet sind, bei denen, die von dem Fluid durchströmte Leitung in der Ultraschall-Messvorrichtung eingeklemmt wird, sind beispielsweise in der EP 3 489 634 A1 oder auch in der EP 3 816 590 A1 offenbart.

Auch in Ultraschall-Messsystemen, in denen die Ultraschall-Messvorrichtung als Klemmvorrichtung ausgestaltet ist, kann eine separate, d.h. von der Leitung verschiedene Messröhre vorgesehen sein, deren Enden mit der Leitung verbunden werden. Diese Verbindung kann beispielsweise jeweils mittels einer Stecknippelverbindung ("barbed fitting") erfolgen. Das Fluid strömt dann aus der Leitung in die separate Messröhre, durchströmt die Messröhre und strömt an deren anderen Ende wieder in die Leitung.

Je nach Anwendungsfall kann die Ausgestaltung mit der separaten, also von der Leitung verschiedenen Messröhre vorteilhaft sein. Insbesondere für Messungen an sehr empfindlichen oder sehr aggressiven Substanzen stellt die Reinigung bzw. das Sterilisieren des Ultraschall-Messsystems einen sehr grossen Zeit-Material- und Kostenaufwand dar. Daher besteht häufig das Bedürfnis, die mit den Substanzen in Kontakt kommenden Komponenten, also beispielsweise die Messröhre, als Einmal (single-use) -teile für den Einmalgebrauch auszugestalten. Bei der Ausgestaltung für den Einmalgebrauch werden vorzugsweise diejenigen Komponenten, welche mit den zu behandelnden Fluiden in Kontakt kommen, nur genau einmal verwendet und dann bei der nächsten Anwendung durch neue, das heisst ungebrauchte, Einmalteile ersetzt. Bei der Herstellung bzw. der Konzipierung von Einmalteilen ist es ein wichtiges Kriterium, dass diese in möglichst einfacher Weise mit den anderen Komponenten der Messvorrichtung zusammengesetzt werden können. Es ist wünschenswert, dass dieses Zusammensetzen und natürlich auch das Trennen mit möglichst geringem Aufwand, mit wenigen Handgriffen, rasch und vorzugsweise ohne Werkzeug erfolgen kann.

Unabhängig von der konkreten Ausgestaltung des Ultraschall-Messsystems steigen heutzutage die Anforderungen an die Genauigkeit und die Reproduzierbarkeit der mit dem Messsystem durchgeführten Messungen, beispielsweise Durchflussmessungen, immer mehr an.

Ausgehend von diesem Stand der Technik ist es daher eine Aufgabe der Erfindung, ein Ultraschall-Messsystem zur Messung an einem in einer Leitung strömenden Fluid vorzuschlagen, welche eine sehr genaue, zuverlässige und reproduzierbare Ermittlung des Durchflusses ermöglicht. Ferner ist es eine Aufgabe der Erfindung, eine Messröhre für ein solches Ultraschall-Messsystem vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Ultraschall-Messsystem zur Messung an einem in einer Leitung strömenden Fluid vorgeschlagen, mit einer Messröhre, welche von dem Fluid in einer Strömungsrichtung durchströmbar ist, sowie mit einer Ultraschall-Messvorrichtung, welche zur Ermittlung eines Durchflusses des Fluids durch die Messröhre ausgestaltet ist, wobei die Ultraschall-Messvorrichtung einen ersten Ultraschallwandler und einen zweiten Ultraschallwandler umfasst, die eine Messstrecke festlegen, wobei die Ultraschallwandler derart angeordnet und ausgerichtet sind, dass sie Messsignale entlang der Messstrecke miteinander austauschen können, und wobei die Messröhre bezüglich der Ultraschall-Messvorrichtung so angeordnet ist, dass die Messstrecke durch die Messröhre verläuft. Stromaufwärts der Messstrecke ist eine Konditionierungseinrichtung zum Einwirken auf das Fluid vorgesehen, wobei die Konditionierungseinrichtung derart ausgestaltet ist, dass sie eine laminare Strömung des Fluids in eine Strömung umwandelt, welche entlang der Messstrecke turbulent ist.

Eine Erkenntnis, auf welcher die Erfindung basiert, ist es, dass eine turbulente Strömung entlang der Messstrecke eine besonders genaue und sehr gut reproduzierbare Bestimmung des Durchflusses des Fluids durch die Leitung ermöglicht. Üblicherweise war man bisher bemüht, Ultraschallmessungen an einem in einer Leitung strömenden Fluid an einer laminaren Strömung des Fluids durchzuführen, d.h. die Strömung des Fluids so zu konditionieren, dass im Messbereich bzw. auf der Messstrecke Turbulenzen oder Verwirbelungen vermieden werden.

Wie allgemein üblich, wird eine Strömung des Fluids dann als laminar bezeichnet, wenn das Fluid in Schichten strömt, die sich nicht miteinander vermischen, sodass keine Verwirbelungen oder Querströmungen in dem Fluid auftreten. Wenn man sich weit genug vom Einlauf des Fluids in die Leitung entfernt, also Einströmeffekte zumindest vernachlässigen kann, so befindet man sich im Bereich der Rohrströmung. Insbesondere in diesem Bereich lässt sich die Art der Strömung durch die Reynolds-Zahl Re abschätzen, die wie folgt definiert ist:

$$Re = \frac{V * d}{v}$$

Dabei bezeichnet V die Strömungsgeschwindigkeit, d den Innendurchmesser des Rohres (hier also der Leitung) und v die kinematische Viskosität des Fluids.

Üblicherweise geht man davon aus, dass bei einer kritischen Reynolds-Zahl von 2300 der Übergang von der laminaren zur turbulenten Strömung stattfindet. Allerdings ist der Übergang von der laminaren zur turbulenten Strömung von einigen Faktoren abhängig, wie beispielsweise von der Oberfläche der Leitung, an welcher das Fluid entlang strömt, von der Temperatur und der Viskosität des Fluids, oder von den Einlaufbedingungen. Es ist jedoch im konkreten Anwendungsfall ohne grössere Aufwände - zumindest näherungsweise -ermittelbar, beispielsweise mithilfe computergestützter Simulationen und/oder messtechnischer Untersuchungen, wo der Übergang von der laminaren Strömung zur turbulenten Strömung stattfindet.

Es hat sich gezeigt, dass im Übergangsbereich zwischen einer laminaren und einer turbulenten Strömung, vermutlich aufgrund des äusserst instabilen Strömungsprofils, sehr starke Schwankungen der Messungen des Durchflusses mittels Ultraschalls auftreten. Ein guter Indikator für die Schwankungen der Messwerte ist beispielsweise die Standardabweichung oder die Varianz der Messwerte. Im Übergangsbereich zwischen der laminaren und der turbulenten Strömung ist die Standardabweichung der Messwerte von Durchflussmessungen mittels Ultraschalls ganz erheblich, beispielsweise eine Grössenordnung, stärker als im turbulenten Bereich der Strömung. Im turbulenten Bereich der Strömung des Fluids lassen sich daher mittels Ultraschalls sehr zuverlässige, genaue und reproduzierbare Ermittlungen des Durchflusses des Fluids durch die Leitung durchführen. Daher wird durch die Erfindung vorgeschlagen, stromaufwärts der Messstrecke eine Konditionierungseinrichtung zum Einwirken auf das Fluid vorzusehen, die derart ausgestaltet ist, dass sie eine laminare Strömung des Fluids in eine Strömung umwandelt, welche entlang der Messstrecke turbulent ist.

Wie bereits erwähnt, stellt es für den konkreten Anwendungsfall kein Problem dar, die Konditionierungseinrichtung so auszugestalten, dass die Strömung des Fluids entlang der Messstrecke eine turbulente Strömung ist, dass also die Ultraschallmessungen an einer turbulenten Strömung durchgeführt werden. Die konkrete Ausgestaltung der Konditionierungseinrichtung für einen spezifischen Anwendungsfall kann beispielsweise mithilfe von computergestützten Simulationen, empirischen oder heuristischen Daten, Erfahrungswerten oder messtechnischen Methoden erfolgen.

Für die Ausgestaltung und/oder die Anordnung der Konditionierungseinrichtung gibt es verschiedene Varianten.

Eine bevorzugte Ausführungsform für die Konditionierungseinrichtung besteht darin, dass die Konditionierungseinrichtung an der Messröhre vorgesehen ist. Dabei kann die Konditionierungseinrichtungen Komponenten umfassen, die in der Messröhre angeordnet sind, und/oder Komponenten, die aussen an der Messröhre vorgesehen sind, bzw. von aussen auf die Messröhre einwirken.

So können beispielsweise in der Messröhre strömungsbeeinflussende Elemente wie Vorsprünge oder Rücksprünge vorgesehen sein, welche dazu beitragen, eine laminare Strömung in eine turbulente Strömung zu verändern. Beispiele für solche strömungsbeeinflussenden Elemente werden weiter hinten noch gegeben. Auch kann die innere Wandung der Messröhre mit einer Struktur versehen werden, welche die Verwirbelung fördert und damit den Umschlag in den Bereich der turbulenten Strömung. Solche Strukturen in der inneren Wandung können Grübchen ("dimple"), Vertiefungen, Versenkungen oder nach innen gerichteten Ausbeulungen in der inneren Wandung umfassen.

Komponenten, die aussen an der Messröhre vorgesehen sind, bzw. von aussen auf die Messröhre einwirken, können beispielsweise eine von aussen aufgezwungene mechanische Bewegung der Leitung oder der Messröhre generieren, die sich dann auf das Fluid überträgt und zusätzlich zu der Strömung des Fluids eine weitere Bewegung des Fluids verursacht. Eine solche mechanische, von aussen aufgeprägte Bewegung der Leitung bzw. der Messröhre kann beispielsweise mit einem Stempel erfolgen, der sich hin und her bewegt, beispielsweise senkrecht zur Strömungsrichtung, und dabei die Wandung der Leitung oder der Messröhre deformiert bzw. nach innen eindrückt. Auch ist es möglich, mittels eines piezoelektrischen Elements, das aussen auf der Leitung bzw. der Messröhre angebracht ist, eine mechanische Bewegung, beispielsweise eine Schwingung der Leitung zu verursachen, welche sich dann auf das Fluid in der Leitung bzw. der Messröhre überträgt. Eine weitere Möglichkeit besteht darin, auf oder an der Leitung oder Messröhre einen kleinen Motor vorzusehen, welcher, beispielsweise mittels einer Unwucht, der Wandung der Leitung oder der Messröhre periodisch eine mechanische Bewegung oder Deformation aufprägt.

Auch sind Ausgestaltungen der Konditionierungseinrichtung möglich, bei welchen die Führung der Leitung und/oder der Messröhre Umlenkungen wie beispielsweise Biegungen der Leitung bzw. der Messröhre verursacht, welche einen Übergang vom Bereich der laminaren Strömung in den Bereich der turbulente Strömung hervorrufen.

Bei manchen Ausführungsformen kann die Leitung die Messröhre bilden. Bei diesen Ausführungsformen ist also keine separate, d.h. von der Leitung separierbare Messröhre vorgesehen, sondern die Messröhre ist integraler Bestandteil der Leitung. Die Leitung selbst, bzw. ein Teil der Leitung ist die Messröhre, durch welche die Messstrecke verläuft. Dies ist beispielsweise bei einer Ultraschall-Messvorrichtung möglich, welche als Klemmvorrichtung für eine Klemmverbindung mit der Leitung ausgestaltet ist. Die Leitung wird dann in die Ultraschall-Messvorrichtung eingelegt, und anschliessend wird die Ultraschall-Messvorrichtung durch eine Klemmverbindung an der Leitung befestigt.

Bei manchen Ausführungsformen ist die Messröhre als von der Leitung verschiedene Komponente ausgestaltet, wobei sich die Messröhre von einem ersten Ende bis zu einem zweiten Ende erstreckt, wobei die Messstrecke bezüglich der Strömungsrichtung zwischen dem ersten Ende und dem zweiten Ende der Messröhre liegt, und wobei die Messröhre an ihrem ersten Ende einen ersten Anschluss aufweist, welcher zur Verbindung mit der Leitung ausgestaltet ist, und an ihrem zweiten Ende einen zweiten Anschluss aufweist, welcher zur Verbindung mit der Leitung ausgestaltet ist.

Bei diesen Ausführungsformen ist die Messröhre also eine von der Leitung lösbare bzw. mit der Leitung verbindbare separate Komponente, die im Betriebszustand von dem Fluid durchströmt wird. Der erste Anschluss und der zweite Anschluss der Messröhre können beispielsweise jeweils als Stecknippelverbindung ("barbed fitting") ausgestaltet sein, sodass ein offenes Ende der Leitung in einfacher Weise auf den ersten Anschluss der Messröhre aufgeschoben werden kann, und ein anderes offenes Ende der Leitung in einfacher Weise auf den zweiten Anschluss der Messröhre aufgeschoben werden kann. Das Fluid strömt dann aus der Leitung in das erste Ende der Messröhre, durchströmt die Messröhre und strömt dann am zweiten Ende aus der Messröhre in die Leitung.

Bei der Ausgestaltung der Messröhre als separate Komponente wird die Messröhre vorzugsweise aus einem Kunststoff hergestellt und ist bevorzugt derart ausgestaltet, dass sie im Wesentlichen formstabil ist. Das bedeutet, dass die Messröhre einerseits deutlich härter ist als beispielsweise ein Silikonschlauch oder ein Kautschukschlauch, wie er häufig für die Leitung verwendet wird, aber andererseits noch ausreichend deformierbar ist, beispielsweise, um eine Ultraschall-Messvorrichtung auf die Messröhre aufzuklemmen oder die Wandung der Messröhre zur Strömungsbeeinflussung in der Messröhre zu deformieren. Die Formstabilität der Messröhre ist insbesondere dann vorteilhaft, wenn in der Messröhre strömungsbeeinflussende Elemente der Konditionierungseinrichtung vorgesehen sind. Insbesondere ist es bevorzugt, dass die Messröhre mittels eines Spritzgiessverfahrens herstellbar ist.

Gemäss einer bevorzugten Ausgestaltung umfasst die Konditionierungseinrichtung ein Konditionierungselement, das im Inneren der Messröhre zwischen dem ersten Ende und dem zweiten Ende vorgesehen ist. Das Konditionierungselement ist als strömungsbeeinflussendes Element ausgestaltet, um eine laminare Strömung in eine turbulente Strömung umzuwandeln.

Gemäss einer bevorzugten Ausführungsform umfasst die Konditionierungseinrichtung als Konditionierungselement eine ringförmige Erhebung, welche sich in Umfangsrichtung entlang einer inneren Oberfläche der Messröhre erstreckt, sodass ein freier Strömungsquerschnitt der Messröhre an der ringförmigen Erhebung kleiner ist, als am ersten Ende der Messröhre.

Gemäss einer weiteren bevorzugten Ausführungsform umfasst die Konditionierungseinrichtung eine ringförmige Vertiefung, welche sich in Umfangsrichtung entlang einer inneren Oberfläche der Messröhre erstreckt, sodass ein freier Strömungsquerschnitt der Messröhre an der ringförmigen Vertiefung grösser ist, als am ersten Ende der Messröhre.

Eine weitere bevorzugte Massnahme besteht darin, dass die Konditionierungseinrichtung ein Konditionierungselement umfasst, das am ersten Anschluss der Messröhre vorgesehen ist. So kann beispielsweise der erste Anschluss derart ausgestaltet werden, dass er eine Wirbelbildung bzw. eine Verwirbelung des Fluids verursacht.

Gemäss einem bevorzugten Ausführungsbeispiel sind der erste Ultraschallwandler und der zweite Ultraschallwandler so angeordnet, dass sich die Messstrecke parallel zur Strömungsrichtung erstreckt.

Gemäss einem anderen bevorzugten Ausführungsbeispiel ist der erste Ultraschallwandler im Betriebszustand lateral auf einer ersten Seite der Messröhre angeordnet, und der zweite Ultraschallwandler ist im Betriebszustand lateral auf einer zweiten Seite der Messröhre angeordnet, wobei die zweite Seite der ersten Seite gegenüberliegt, und wobei die Ultraschallwandler derart angeordnet und ausgerichtet sind, dass die Messstrecke schräg zu der Strömungsrichtung ausgerichtet ist.

Ferner ist es eine bevorzugte Ausführungsform, dass die Ultraschall-Messvorrichtung als Klemmvorrichtung für eine Klemmverbindung mit der Leitung ausgestaltet ist, und ein schliessbares Gehäuse umfasst, welches einen durchgängigen Messkanal aufweist, der zur Aufnahme der Messröhre ausgestaltet ist, wobei das Gehäuse derart zur lösbaren Befestigung an der Leitung oder an der Messröhre ausgestaltet ist, dass im geschlossenen Zustand des Gehäuses der Messkanal die Messröhre aufnehmen und bezüglich des Gehäuses fixieren kann, wobei die Konditionierungseinrichtung mindestens einen Vorsprung umfasst, welcher sich derart in den Messkanal hinein erstreckt, dass der Vorsprung zumindest im geschlossenen Zustand des Gehäuses den freien Strömungsquerschnitt der Messröhre durch eine Deformation der Messröhre lokal reduziert.

Dabei ist es auch bevorzugt, dass die Konditionierungseinrichtung zwei Vorsprünge umfasst, von denen sich jeder derart in den Messkanal hinein erstreckt, dass er zumindest im geschlossenen Zustand des Gehäuses den freien Strömungsquerschnitt der Messröhre durch eine Deformation der Messröhre lokal reduziert, wobei einer der beiden Vorsprünge stromaufwärts der Messstrecke angeordnet ist, und der andere der beiden Vorsprünge stromabwärts der Messstrecke. Diese Ausgestaltung hat den Vorteil, dass die Ultraschall-Messvorrichtung mit zwei unterschiedlichen Strömungsrichtungen des Fluids betrieben werden kann. Diese beiden Strömungsrichtungen sind einander entgegengesetzt.

Gemäss einer weiteren bevorzugten Ausführungsform umfasst die Konditionierungseinrichtung ein Führungselement zum Führen der Leitung, wobei das Führungselement zum Umlenken der Leitung, vorzugsweise um mindestens 90°, ausgestaltet ist. Durch dieses Umlenken der Leitung, das stromaufwärts der Messstrecke stattfindet, kann das Umschlagen einer laminaren Strömung des Fluids in eine turbulente Strömung verursacht werden.

Durch die Erfindung wird ferner eine Messröhre für ein Ultraschall-Messsystem vorgeschlagen, wobei die Messröhre für ein Ultraschall-Messsystem ausgestaltet ist, welches erfindungsgemäss ausgestaltet ist.

Gemäss einer besonders bevorzugten Ausgestaltung ist die Messröhre als Einmalteil für den Einmalgebrauch ausgestaltet. Die Messröhre ist dann also eine Einmalvorrichtung, die bestimmungsgemäss nur ein einziges Mal verwendet werden darf und für die nächste Anwendung durch eine neue, das heisst unbenutzte Einmalvorrichtung ersetzt werden muss.

Um eine möglichst einfach zu handhabende Verbindung zwischen der als Einmalvorrichtung ausgestalteten Messröhre und der als wiederverwendbare Vorrichtung ausgestalteten Ultraschall-Messvorrichtung zu gewährleisten, ist es bevorzugt, dass die Einmalvorrichtung und die wiederverwendbare Vorrichtung mittels einer Klemmverbindung miteinander verbindbar sind.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:

Fig. 1:      eine schematische Darstellung eines ersten Ausführungsbeispiels eines erfindungsgemässen Ultraschall-Messsystems zur Messung an einem in einer Leitung strömenden Fluid,

Fig. 2:      eine perspektivische Darstellung einer Ultraschall-Messvorrichtung zur Bestimmung des Durchflusses, ausgestaltet als Klemmvorrichtung,

Fig. 3:      eine schematische Schnittdarstellung eines Ausführungsbeispiels einer erfindungsgemässen Messröhre,

Fig. 4-9:      Varianten für die Ausgestaltung von Konditionierungselementen der Konditionierungseinrichtung,

Fig. 10-18:      Varianten für die Ausgestaltung der Konditionierungseinrichtung,

Fig. 19:      eine schematische Darstellung eines zweiten Ausführungsbeispiels eines erfindungsgemässen Ultraschall-Messsystems zur Messung an einem in einer Leitung strömenden Fluid, und

Fig. 20:      eine Schnittdarstellung einer Ausführungsform einer Messröhre für das zweite Ausführungsbeispiel.

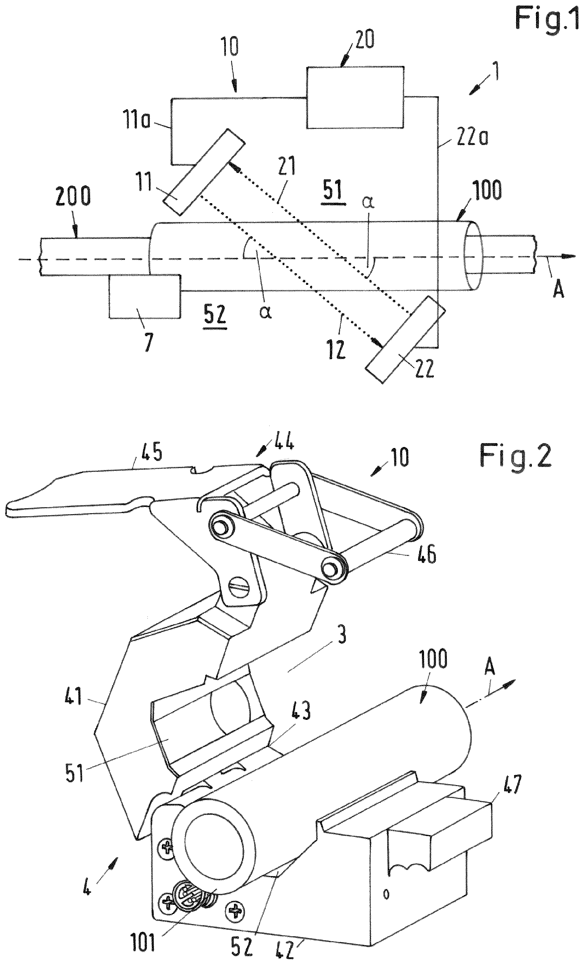

Fig. 1 zeigt eine schematische Darstellung eines ersten Ausführungsbeispiels eines erfindungsgemässen Ultraschall-Messsystems zur Messung an einem in einer Leitung 200 strömenden Fluid. Das Ultraschall-Messsystem ist gesamthaft mit dem Bezugszeichen 1 bezeichnet. Das Ultraschall-Messsystem 1 umfasst eine Messröhre 100, welche von dem Fluid in einer Strömungsrichtung A durchströmbar ist, wobei die Strömungsrichtung A entlang bzw. parallel zur Längsachse der Messröhre 100 verläuft.

Das Ultraschall-Messsystem 1 umfasst ferner eine Ultraschall-Messvorrichtung 10, welche zur Ermittlung eines Durchflusses des Fluids durch die Messröhre 100 ausgestaltet ist.

Bei manchen Ausführungsformen kann die Leitung 200 die Messröhre 100 bilden. Bei diesen Ausführungsformen ist also keine separate, d.h. von der Leitung 200 separierbare Messröhre 100 vorgesehen, sondern die Messröhre 100 ist integraler Bestandteil der Leitung 200. Die Leitung 200 selbst, bzw. ein Teil der Leitung 200 ist die Messröhre 100, an welcher die Ultraschall-Messvorrichtung 10 misst. Dies ist beispielsweise bei einer Ultraschall-Messvorrichtung 10 möglich, welche -wie dies beispielsweise in Fig. 2 dargestellt ist - als Klemmvorrichtung für eine Klemmverbindung mit der Leitung 200 ausgestaltet ist. Die Leitung 200 wird dann in die Ultraschall-Messvorrichtung 10 eingelegt, und anschliessend wird die Ultraschall-Messvorrichtung 10 durch eine Klemmverbindung an der Leitung 200 befestigt.

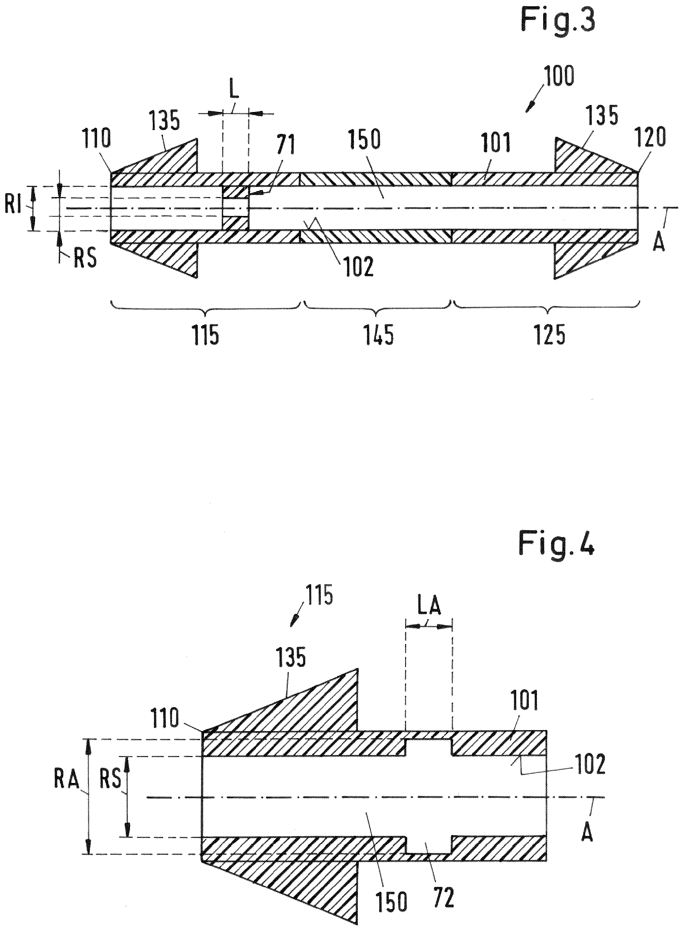

Bei manchen Ausführungsformen ist die Messröhre 100 als eine von der Leitung 200 verschiedene Komponente ausgestaltet, siehe zum Beispiel Fig. 3, wobei sich die Messröhre 100 von einem ersten Ende 110 bis zu einem zweiten Ende 120 erstreckt, wobei die Ultraschall-Messvorrichtung 10 bezüglich der Strömungsrichtung A zwischen dem ersten Ende 110 und dem zweiten Ende 120 der Messröhre 100 Messungen durchführt. Die Messröhre 100 weist dann an ihrem ersten Ende 110 einen ersten Anschluss 115 auf, welcher zur Verbindung mit der Leitung 200 ausgestaltet ist, und an ihrem zweiten Ende 120 einen zweiten Anschluss 125, welcher ebenfalls zur Verbindung mit der Leitung 200 ausgestaltet ist. Der erste und der zweite Anschluss 115, 125 können in jeder an sich bekannten Ausgestaltung ausgebildet sein, die dafür geeignet ist, die Messröhre 100 mit der Leitung 200, die insbesondere flexibel ausgestaltet sein kann, zu verbinden. Insbesondere können der erste und der zweite Anschluss 115, 125 als Stecknippelverbindung ("barbed fitting") ausgestaltet sein, sodass die Leitung 200 in einfacher Weise auf den ersten Anschluss 115 bzw. auf den zweiten Anschluss 125 aufgeschoben werden kann, derart, dass die Leitung 200 dichtend mit der Messröhre 100 verbunden ist.

Bei einer Stecknippelverbindung ist üblicherweise ein konischer Bereich 135 vorgesehen, über welchen die Leitung 200, bzw. ein Ende der Leitung 200 gezogen oder geschoben wird. Dieser konische Bereich 135 ist üblicherweise mit einer oder mehreren Rippe(n) versehen. In der vereinfachten Darstellung der Fig. 3-5 sind diese Rippen nicht dargestellt, können aber natürlich in an sich bekannter Weise vorgesehen sein.

Im Folgenden sind Bezugnahmen auf die Messröhre 100 in sinngemässer Weise so zu verstehen, dass damit eine separate, d.h. von der Leitung 200 verschiedene Messröhre 100 gemeint ist, oder dass die Leitung 200 bzw. ein Teil der Leitung 200 die Messröhre 100 bildet.

Grundsätzlich sind für das erfindungsgemässe Ultraschall-Messsystem 1 alle Ultraschall-Messvorrichtungen 10 geeignet, mit denen der Durchfluss eines Fluids ermittelbar ist, welches durch die Leitung 200 strömt. Es sind also auch solche Ultraschall-Messvorrichtungen 10 geeignet, die selbst einen Teil der Leitung 200 bzw. die Messröhre 100 bilden, also beispielsweise sogenannte Inline Messvorrichtungen, insbesondere solche, wie sie von der Anmelderin unter der Markenbezeichnung LEVIFLOW LFS vertrieben werden.

Im Folgenden wird auf den für die Praxis besonders wichtigen Fall Bezug genommen, dass die Leitung 200 eine flexible Leitung 200 ist, also eine Leitung 200, deren Wandung deformierbar ist. Die flexible Leitung 200 ist beispielsweise ein Kunststoffschlauch, der aus einem Silikonkautschuk oder aus PVC besteht. Natürlich kann die Leitung 200 auch aus anderen Materialien, insbesondere aus einem Kunststoff oder einem Kautschuk bestehen. Selbstverständlich kann die Leitung 200 auch als starre, also nicht flexible Leitung ausgebildet sein. Falls die Messröhre 100 als separate Komponente ausgestaltet ist, so besteht die Messröhre 100 vorzugsweise aus einem Kunststoff und ist vorzugsweise deutlich härter als die Leitung 200 und insbesondere formstabil ausgestaltet.

Bei der in Fig. 1 dargestellten Ultraschall-Messvorrichtung 10 sind für das Aussenden und das Empfangen von Messsignalen 12, 21, welche Ultraschallsignale sind, mindestens zwei Ultraschallwandler 11, 22 vorgesehen, nämlich ein erster Ultraschallwandler 11 und ein zweiter Ultraschallwandler 22. Im Betriebszustand ist der erste Ultraschallwandler 11 lateral auf einer ersten Seite 51 der Messröhre 100 angeordnet, und der zweite Ultraschallwandler 22 ist lateral auf einer zweiten Seite 52 der Messröhre 100 angeordnet, wobei die zweite Seite 52 der ersten Seite 51 gegenüberliegt. Die Ultraschallwandler 11, 22 sind derart angeordnet und ausgerichtet, dass der erste Ultraschallwandler 11 ein erstes Messsignal 12 schräg zu der Strömungsrichtung A des Fluids an den zweiten Ultraschallwandler 22 aussenden kann, und ein von dem zweiten Ultraschallwandler 22 schräg zur Strömungsrichtung A ausgesendetes zweites Messsignal 21 empfangen kann. Durch die beiden Ultraschallwandler 11 und 12 wird somit eine Messstrecke festgelegt, die sich zwischen diesen beiden Ultraschallwandlern 11,22 befindet.

Die Messsignale 12, 21 sind in Fig. 1 symbolisch jeweils durch gestrichelte gerade Linien mit einer Pfeilspitze dargestellt. Dies ist so zu verstehen, dass die gestrichelte Linie jeweils die Hauptausbreitungsrichtung des von dem entsprechenden Ultraschallwandlers 11, 22 ausgesendeten Ultraschallsignals angibt und die Pfeilspitze die Richtung, also ob sich das jeweilige Ultraschallsignal auf den jeweiligen Ultraschallwandler 11, 22 zubewegt, also empfangen wird, oder von diesem weg bewegt, also gesendet wird. Die Hauptausbreitungsrichtung steht üblicherweise senkrecht auf der Oberfläche des piezoelektrischen Elements des entsprechenden Ultraschallwandlers 11 bzw. 22. Die Hauptausbreitungsrichtung schliesst mit der Strömungsrichtung A einen Winkel $\alpha$ ein, der von 0° und von 90° verschieden ist.

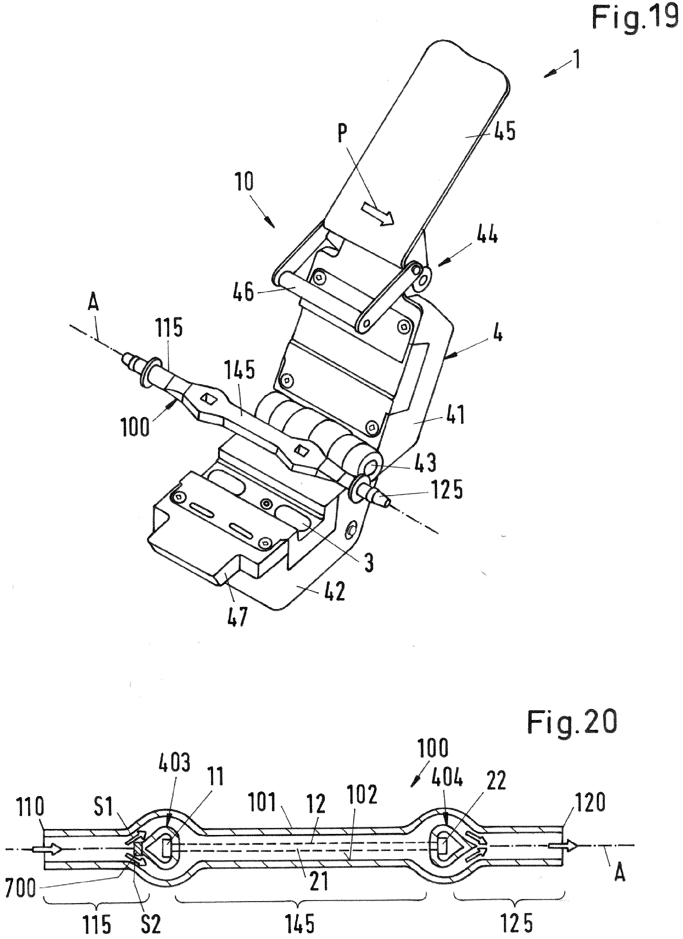

Bei Ultraschall-Messvorrichtungen 10, die als Inline Messvorrichtungen ausgestaltet sind, ist es häufig so, dass dieser Winkel $\alpha$ gleich 0° bzw. gleich 180° ist, d.h. die Messsignale werden so ausgesendet, dass ihre Hauptausbreitungsrichtung gleich der Strömungsrichtung A ist bzw. genau entgegengesetzt zur Strömungsrichtung A gerichtet ist. Die lässt sich beispielsweise mit U-förmig oder Z-förmig ausgestalteten Ultraschall-Messvorrichtungen realisieren. Ferner wird im Rahmen des zweiten Ausführungsbeispiels (siehe Fig. 19) eine Ausführungsform beschrieben, bei welcher die beiden Ultraschallwandler 11, 22 so angeordnet sind, dass sich die Messstrecke parallel zur Strömungsrichtung A erstreckt.

Bei der in Fig. 1 dargestellten Ultraschall-Messvorrichtung 1 wird zur Bestimmung des Durchflusses des Fluids durch die Messröhre 100 beispielsweise wie folgt vorgegangen. Der erste Ultraschallwandler 11 sendet ein erstes Messsignal 12 aus, wobei das erste Messsignal 12 schräg unter dem Winkel $\alpha$ zur Strömungsrichtung A und in Strömungsrichtung A ausgesendet wird, womit gemeint ist, dass die Hauptausbreitungsrichtung des ersten Messsignals 12 auch eine Komponente in Strömungsrichtung A hat. Der zweite Ultraschallwandler 22 sendet ein zweites Messsignal 21 aus, wobei das zweite Messsignal 21 schräg unter dem Winkel $\alpha$ zur Strömungsrichtung A und gegen die Strömungsrichtung A ausgesendet wird, womit gemeint ist, dass die Hauptausbreitungsrichtung des zweiten Messsignals 21 auch eine Komponente entgegen der Strömungsrichtung A hat

Das erste Messsignal 12 wird von dem zweiten Ultraschallwandlern 22 nach Durchlaufen des Fluids empfangen und über eine Signalleitung 22a an eine Speicher- und Auswerteeinheit 20 übermittelt. Das zweite Messsignal 21 wird von dem ersten Ultraschallwandlern 11 nach Durchlaufen des Fluids empfangen und über eine Signalleitung 11a an die Speicher- und Auswerteeinheit 20 übermittelt.

In der Speicher- und Auswerteeinheit 20 wird die Laufzeitdifferenz ermittelt zwischen dem ersten Messsignal 12, welches durch das strömende Fluid beschleunigt wurde, und dem zweiten Messsignal 21, welches durch das strömende Fluid verlangsamt wurde. Diese Laufzeitdifferenz zwischen dem ersten Messsignal 12 und dem zweiten Messsignal 21 ist direkt abhängig von der Strömungsgeschwindigkeit des Fluids in der Messröhre 100. Somit kann aus der Laufzeitdifferenz die Strömungsgeschwindigkeit und damit der Durchfluss des Fluids durch die Leitung 200 ermittelt werden.

Häufig ist es auch so, dass in der Ultraschallmessvorrichtung 1 mindestens vier Ultraschallwandler 11, 22 zum jeweiligen Aussenden und Empfangen von Ultraschallsignalen vorgesehen sind, nämlich mindestens zwei der ersten Ultraschallwandler 11, welche lateral auf der ersten Seite 51 angeordnet sind, und mindestens zwei der zweiten Ultraschallwandler 22, welche lateral auf der zweiten Seite 52 angeordnet sind. Die Ultraschallwandler 11, 22 sind dann derart angeordnet und ausgerichtet, dass jeweils einer der ersten Ultraschallwandler 11 ein erstes Messsignal 12 schräg zur und mit der Strömungsrichtung A an einen der zweiten Ultraschallwandler 22 aussenden kann, und ein von diesem zweiten Ultraschallwandler 22 schräg zur und entgegen der Strömungsrichtung A ausgesendetes zweites Messsignal 21 empfangen kann. Die vier Ultraschallwandler 11, 12 sind dann beispielsweise in Form eines X angeordnet. Eine derartige Anordnung der Ultraschallwandler 11, 22 ist beispielsweise in der EP 3 489 634 A1 offenbart. Bei dieser Anordnung mit vier Ultraschallwandlern ist es vorteilhaft, dass sowohl in Strömungsrichtung A als auch entgegen der Strömungsrichtung A jeweils zwei voneinander unabhängige Messungen erfolgen, wodurch sich die Genauigkeit und die Zuverlässigkeit der Bestimmung des Durchflusses deutlich erhöhen.

Gemäss einer bevorzugten Ausgestaltung ist die Ultraschall-Messvorrichtung 10 als Klemmvorrichtung ausgestaltet, sodass die Messröhre 100 in der Ultraschall-Messvorrichtung 10 eingeklemmt werden kann. Fig. 2 zeigt in einer perspektivischen Darstellung eine Ausführungsform einer Ultraschall-Messvorrichtung 10 zur Bestimmung des Durchflusses durch die Messröhre 100, die als Klemmvorrichtung ausgestaltet ist.

Die Ultraschall-Messvorrichtung 10 umfasst ein Gehäuse 4. Die Ultraschall-Messvorrichtung 10 ist als Klemmvorrichtung für eine Klemmverbindung mit der Messröhre 100 ausgestaltet, d.h. das Gehäuse 4 der Ultraschall-Messvorrichtung 10 kann auf die Messröhre 100 bzw. auf die Leitung 200 geklemmt werden, derart, dass die Messröhre 100 bzw. die Leitung 200 bezüglich des Gehäuses 4 fixiert ist. Die prinzipielle Ausgestaltung der Ultraschall-Messvorrichtung 10 mit dem Gehäuses 4 ist an sich bekannt, beispielsweise aus der EP 3 489 634 A1. Auch in der EP 3 816 590 A1 wird eine Ultraschall-Messvorrichtung 10 offenbart, die als Klemmvorrichtung zur lösbaren Befestigung an der Messröhre 100 ausgestaltet und für das erfindungsgemässe Ultraschall-Messsystem 1 geeignet ist.

Das Gehäuse 4 ist als schliessbares Gehäuse 4 ausgestaltet und umfasst ein erstes Gehäuseteil 41 sowie ein zweites Gehäuseteil 42, welche über ein Gelenk 43 gelenkig miteinander verbunden sind. Fig. 2 zeigt das Gehäuse 4 im geöffneten Zustand. Das Gehäuse 4 weist ferner eine durchgängige zentrale Ausnehmung 3 auf, welche sich durch das gesamte Gehäuse 4 erstreckt und einen Messkanal bildet. Der von der zentralen Ausnehmung 3 gebildete Messkanal dient zur Aufnahme der Messröhre 100. Die Längserstreckung der zentralen Ausnehmung 3 legt die Strömungsrichtung A fest, in welcher das Fluid die Messröhre 100 bzw. das Gehäuse 4 durchströmt.

Das Gehäuse 4 weist ferner einen Verschlussmechanismus 44 auf, um das Gehäuse 4 zu verschliessen und damit die Messröhre 100 in der zentralen Ausnehmung 3 einzuklemmen. Der Verschlussmechanismus 44 ist hier am ersten Gehäuseteil 41 angeordnet und umfasst einen Bügel 46 sowie eine klappbare Lasche 45 zum Spannen des Bügels 46. Die Messröhre 100 wird in die zentrale Ausnehmung 3 eingelegt, die den Messkanal bildet, anschliessend werden die beiden Gehäuseteile 41, 42 zusammengeklappt, d.h. das erste Gehäuseteil 41 wird über die Messröhre 100 geklappt. Der Bügel 46 wird in Eingriff mir einem Vorsprung 47 am zweiten Gehäuseteil 42 gebracht, und durch Betätigen der Lasche 45 werden die beiden Gehäuseteile 41, 42 miteinander verspannt. Das Gehäuse 4 ist dann in seinem geschlossenen Zustand, in welchem die Messröhre 100 in der zentralen Ausnehmung 3 eingeklemmt und somit bezüglich des Gehäuses 4 fixiert ist.

Im geschlossenen Zustand des Gehäuses 1 ist die Messröhre 100 somit zwischen der ersten Seite 51 und der zweiten Seite 52 fixiert, welche sich bezüglich der zentralen Ausnehmung 3, welche den Messkanal bildet, gegenüberliegen.

Am Gehäuse 4 kann ferner ein Markierungselement P (Fig. 19) vorgesehen sein, beispielsweise ein Pfeil, welches die Strömungsrichtung festlegt, in welcher das Fluid die Ultraschall-Messvorrichtung 10 durchströmen soll. Das Markierungselement P ist in Fig. 2 nicht dargestellt.

Die zentrale Ausnehmung 3 ist vorzugsweise so ausgestaltet, dass sie und damit der Messkanal im geschlossenen Zustand des Gehäuses 4 senkrecht zur Strömungsrichtung A einen im Wesentlichen rechteckigen, insbesondere einen quadratischen Querschnitt aufweist. Dies hat den Vorteil, dass Ultraschallmesssignale, mit welchen die Messröhre 100 beaufschlagt wird, auf planare, d.h. nicht gekrümmte, Oberflächen treffen, wodurch sich die Detektion und die Auswertung der Messsignale 12, 21 stark vereinfacht und die Genauigkeit der Messung erhöht wird.

Es sind auch Ausführungsformen bekannt, bei denen die zentrale Ausnehmung derart ausgestaltet ist, dass sie im geschlossenen Zustand des Gehäuses senkrecht zur Strömungsrichtung A einen anderen polygonalen Querschnitt, beispielsweise einen hexagonalen Querschnitt aufweist. Ferner sind Ausführungsformen bekannt, bei denen dieser Querschnitt kreisförmig oder oval ist. Bei solchen Ausführungsformen werden dann häufig akustische Linsen zum Aussenden und/oder zum Empfangen der Messsignale verwendet.

Die Messröhre 100 kann insbesondere mit einem kreisförmigen Querschnitt senkrecht zur Strömungsrichtung A ausgestaltet sein. Wenn die Messröhre 100 in die zentrale Ausnehmung 3 eingelegt und dann das Gehäuse 4 geschlossen wird, wird die Wandung 101 der Messröhre 100 derart deformiert, dass der Querschnitt der Messröhre 100 im Wesentlichen dem Querschnitt der zentralen Ausnehmung 3 im geschlossenen Zustand des Gehäuses 4 entspricht. Auch in solchen Fällen, in denen die Messröhre 100 als separate Komponente und härter als die Leitung 200 ausgestaltet ist, kann die Messröhre 100 deformierbar ausgestaltet sein, sodass sich ihr Querschnitt senkrecht zur Strömungsrichtung A dem Querschnitt der zentralen Ausnehmung 3 anpasst, wenn das Gehäuse geschlossen 4 wird.

Die Ultraschallwandler 11, 22, die in Fig. 2 nicht dargestellt sind, sind in dem Gehäuse 4, nämlich auf der ersten Seite 51 bzw. auf der zweiten Seite 52, vorgesehen. Der oder die erste(n) Ultraschallwandler 11 ist/sind auf der ersten Seite 51 angeordnet, und der oder die zweiten Ultraschallwandler 22 ist/sind auf der zweiten Seite 52 angeordnet.

Jeder der Ultraschallwandler 11, 22 ist über jeweils eine der Signalleitungen 11a, 22a (Fig. 1) mit der Speicher- und Auswerteeinheit 20 signalverbunden. Die Signalleitungen 11a, 22a sowie die Speicher- und Auswerteeinheit 20 sind in Fig. 2 nicht dargestellt. Über die jeweilige Signalleitung 11a, 22a werden die Ultraschallwandler 11, 22 zum Aussenden von Ultraschallsignalen angesteuert, und übermitteln die jeweils empfangenen Messsignale 12, 21 an die Speicher- und Auswerteeinheit 20. In der Speicher- und Auswerteeinheit 20 werden die empfangenen Messsignale 12 und 21 analysiert, und es wird jeweils der Durchfluss des Fluids durch die Messröhre 100 mithilfe der Messsignale 12 und 21 ermittelt.

Die Ultraschallwandler 11, 22 können in jeder an sich bekannten Art ausgestaltet sein, insbesondere als piezoelektrische Wandler. Die Frequenz der Ultraschallsignale liegt typischerweise im Megahertz-Bereich, beispielsweise im Bereich von 1 MHz bis 30 MHz.

Die vorangehende Beschreibung der Ultraschall-Messvorrichtung 10 ist lediglich beispielhaft zu verstehen. Für das erfindungsgemässe Ultraschall-Messsystem 1 ist jede Ultraschall-Messvorrichtung 10 geeignet, welche zur Ermittlung des Durchflusses des Fluids durch die Messröhre 100 ausgestaltet bzw. geeignet ist.

Erfindungsgemäss umfasst das Ultraschall-Messsystem 1 ferner eine Konditionierungseinrichtung 7, die stromaufwärts der Messstrecke zum Einwirken auf das Fluid vorgesehen ist. In Fig. 1 ist die Konditionierungseinrichtung 7 nur schematisch angedeutet. Die Konditionierungseinrichtung 7 ist derart ausgestaltet, dass sie eine laminare Strömung des Fluids in eine Strömung umwandelt, welche entlang der Messstrecke turbulent ist. Dadurch, dass mit der Konditionierungseinrichtung 7 eine turbulente Strömung des Fluids aus der Messstrecke erzwungen wird, ist sichergestellt, dass mit der Ultraschall-Messvorrichtung 10 stets an einer turbulenten Strömung gemessen wird. Hierdurch lässt es sich zuverlässig vermeiden, dass im Bereich der Messstrecke ein Umschlag von einer laminaren in eine turbulente Strömung des Fluids stattfindet. Es ist also gewährleistet, dass der Übergangsbereich von der laminaren zur turbulenten Strömung des Fluids nicht auf der Messstrecke liegt. Hierdurch lässt sich die Genauigkeit und auch die Reproduzierbarkeit der Bestimmung des Durchflusses mittels Ultraschalls ganz erheblich verbessern.

Für die Ausgestaltung und/oder die Anordnung der Konditionierungseinrichtung 7 gibt es verschiedene Varianten, von denen im Folgenden einige eingehender beschrieben werden.

Eine bevorzugte Ausführungsform für die Konditionierungseinrichtung 7 besteht darin, dass die Konditionierungseinrichtung 7 an der Messröhre 100 stromaufwärts der Messstrecke vorgesehen ist. Dabei kann die Konditionierungseinrichtung 7 Komponenten umfassen, die in der Messröhre 100 angeordnet sind, und/oder Komponenten, die aussen an der Messröhre 100 vorgesehen sind, bzw. von aussen auf die Messröhre 100 einwirken.

Eine weitere bevorzugte Ausführungsform für die Konditionierungseinrichtung 7 besteht darin, in der Ultraschall-Messvorrichtung 10 oder stromaufwärts der Ultraschall-Messvorrichtung 10 eine Deformation, beispielsweise eine Einschnürung, der Messröhre 100 und/oder der Leitung 200 zu verursachen, welche derart ausgestaltet ist, dass sie den Übergang von einer laminaren zu einer turbulenten Strömung des Fluids hervorruft.

Eine weitere bevorzugte Ausführungsform für die Konditionierungseinrichtung 7 besteht darin, die Führung der Leitung 200 und/oder der Messröhre 100 so zu gestalten, dass durch Umlenkungen des Fluids ein Übergang von der laminaren zur turbulenten Strömung verursacht wird.

Fig. 3 zeigt in einer schematischen Schnittdarstellung ein Ausführungsbeispiel einer erfindungsgemässen Messröhre 100 mit der Wandung 101, wobei die Konditionierungseinrichtung 7 an der Messröhre 100 vorgesehen ist. Die Messröhre 100 ist hier als separate Komponente ausgestaltet, die mit der Leitung 200 (in Fig. 3 nicht dargestellt) verbindbar ist.

Die Messröhre 100 erstreckt sich von dem ersten Ende 110 bis zu dem zweiten Ende 120 und umfasst den ersten Anschluss 115, den zweiten Anschluss 125 sowie einen Messbereich 145, der zwischen dem ersten Anschluss 115 und dem zweiten Anschluss 125 angeordnet ist. Der Messbereich 145 der Messröhre 100 ist derjenige Bereich der Messröhre 100, an welchem im Betriebszustand die Ultraschallmessungen durchgeführt werden, das heisst, wenn die Messröhre 100 mit der Ultraschall-Messvorrichtung 10 verbunden ist, erstreckt sich die Messstrecke durch den Messbereich 145 der Messröhre 100.

Der erste Anschluss 115, der Messbereich 145 und der zweite Anschluss 125 können einstückig ausgestaltet sein, beispielsweise als eine integrale Komponente, die beispielsweise in einem Spritzgiessverfahren hergestellt wird. Andererseits ist es auch möglich den ersten Anschluss 115, den zweiten Anschluss 125 und den Messbereich 145 jeweils als eine separate Komponente herzustellen, beispielsweise jeweils als Spritzgussteil, und diese drei Komponenten 115, 125 und 145 dann miteinander zu verbinden. Diese Verbindung kann mit allen an sich bekannten Möglichkeiten werden. Die Verbindung kann beispielsweise als Steckverbindung, als Klemmverbindung, als Schraubverbindung als Klebverbindung oder als Schweissverbindung ausgestaltet sein.

Wie bereits erwähnt, können der erste und der zweite Anschluss 115, 125 in jeder an sich bekannten Ausgestaltung ausgebildet sein, die dafür geeignet ist, die Messröhre 100 mit der Leitung 200, die insbesondere flexibel ausgestaltet sein kann, zu verbinden. Bei der in Fig. 3 dargestellten Ausführungsform sind der erste und der zweite Anschluss 115, 125 jeweils als Stecknippelverbindung ("barbed fitting") ausgestaltet, sodass die Leitung 200 in einfacher Weise auf den ersten Anschluss 115 bzw. auf den zweiten Anschluss 125 aufgeschoben werden kann, derart, dass die Leitung 200 dichtend mit der Messröhre 100 verbunden ist.

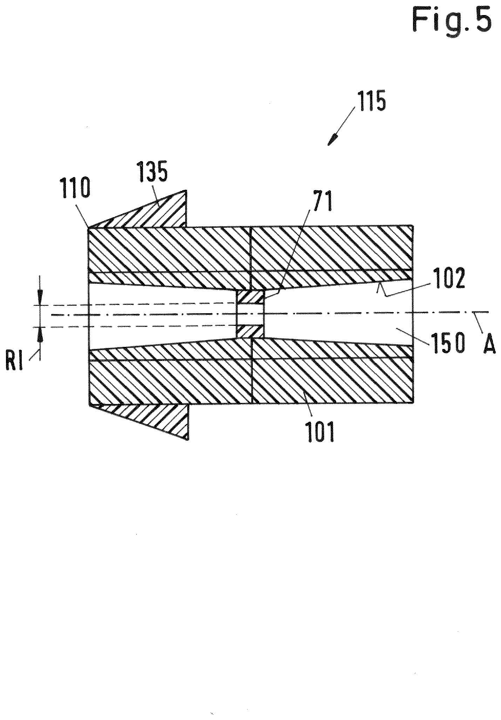

Die Wandung 101 der Messröhre 100 begrenzt einen Strömungskanal 150, der im Betriebszustand von dem Fluid in der Strömungsrichtung A durchströmt wird. Der Strömungskanal 150 ist im Wesentlichen zylindrisch ausgestaltet. Bei anderen Ausführungsformen (siehe z. B. Fig. 5) kann der Strömungskanal auch doppelkonisch ausgestaltet sein.

Die Konditionierungseinrichtung 7 umfasst ein Konditionierungselement 71, das im Inneren der Messröhre 100 zwischen dem ersten Ende 110 und dem zweiten Ende 120 im Strömungskanal 150 vorgesehen ist. Das Konditionierungselement 71 ist in dem ersten Anschluss 115 der Messröhre 100 und damit stromaufwärts des Messbereichs 145 angeordnet. Das Konditionierungselement 71 ist als strömungsbeeinflussendes Element ausgestaltet, um eine laminare Strömung in eine turbulente Strömung umzuwandeln.

Bei der in Fig. 3 dargestellten Ausführungsform ist das Konditionierungselement 71 als eine ringförmige Erhebung ausgestaltet, welche sich in Umfangsrichtung entlang einer inneren Oberfläche 102 der Wandung 101 erstreckt. Die innere Oberfläche 102 begrenzt den Strömungskanal 150 in der zur Strömungsrichtung A senkrechten radialen Richtung.

Das Konditionierungselement 71 ist hier als Ring mit einem Innendurchmesser RI ausgestaltet, wobei der Innendurchmesser RI kleiner ist als der Innendurchmesser RS der Messröhre 100 an ihrem ersten Ende 110. Der Aussendurchmesser des als Ring ausgestalteten Konditionierungselements 71 ist gleich gross wie der Innendurchmesser der Messröhre 100 an derjenigen Stelle, an welcher das Konditionierungselement 71 angeordnet ist, derart dass das Konditionierungselement 71 dichtend an der inneren Oberfläche 102 anliegt. In Strömungsrichtung A gesehen hat das Konditionierungselement 71 eine Länge L. Das Konditionierungselement 71 kann als eine separate Komponente angefertigt werden, welche in den Strömungskanal 150 eingesetzt und in diesem befestigt wird, beispielsweise mittels eines Presssitzes, mittels einer Verklebung oder mittels einer Verschweissung. Natürlich ist es auch möglich, dass das Konditionierungselement 71 integraler Bestandteil des ersten Anschlusses 115 ist, also einstückig mit dem ersten Anschluss 115 ausgestaltet ist. Beispielsweise kann das Konditionierungselement 71 in einem Spritzgiessverfahren als integraler Bestandteil des ersten Anschlusses 115 bzw. der Messröhre 100 geformt werden.

Da der Innendurchmesser RI des Konditionierungselements 7 kleiner ist als der Innendurchmesser RS der Messröhre 100 an ihrem ersten Ende 110 bildet das Konditionierungselement eine Einschnürung im Strömungskanal 150, welche zur Erzeugung von Verwirbelungen dient, um die Strömung des Fluids turbulent zu machen.

Durch das Konditionierungselement 7 wird der freie Strömungsquerschnitt des Strömungskanals 150 lokal verkleinert. Mit dem freien Strömungsquerschnitt ist dabei die zur Strömungsrichtung A senkrechte Querschnittsfläche gemeint, welche dem Fluid zur Durchströmung zur Verfügung steht.

Der freie Strömungsquerschnitt an dem Konditionierungselement 71 ist durch den Innendurchmesser RI des Konditionierungselements 71 festgelegt, während der freie Strömungsquerschnitt am ersten Ende 110 der Messröhre 100 durch den Innendurchmesser RS der Messröhre 100 am ersten Ende 110 festgelegt ist.

An dem Konditionierungselement 71 ist also der freie Strömungsquerschnitt der Messröhre 100 kleiner als an dem ersten Ende 110 der Messröhre 100, an welchem das Fluid in den Strömungskanal 150 der Messröhre 100 einströmt. Diese lokale Einschnürung durch das Konditionierungselement 71 ist so ausgestaltet, dass die Strömung durch das Konditionierungselement 71 turbulent wird.

Vorzugsweise ist dazu der Innendurchmesser RI des Konditionierungselements 71 so ausgestaltet, dass er im Bereich von 30% bis 80% des Innendurchmessers RS der Messröhre 100 am ersten Ende 110 liegt. Besonders bevorzugt ist der Innendurchmesser RI des Konditionierungselements 71 im Bereich von 55% bis 70% des Innendurchmessers RS der Messröhre 100 am ersten Ende 110. Speziell bevorzug ist der Innendurchmesser RI des Konditionierungselements 71 ungefähr 2/3 des Innendurchmessers RS der Messröhre 100 am ersten Ende 110.

Natürlich ist die Geometrie der freien Strömungsquerschnitte nicht auf kreisrunde Formen beschränkt. Selbstverständlich können die Messröhre 100 an dem ersten Ende 110 und/oder das Konditionierungselement 71 als freien Strömungsquerschnitt auch eine Fläche aufweisen, welche eine von einer Kreisfläche abweichende Geometrie hat, beispielsweise eine ovale Fläche oder ein Polygon. Für diesen allgemeineren Fall ist es bevorzugt, dass die Fläche des freien Strömungsquerschnitts an dem Konditionierungselement 71 im Bereich von 9% bis 64% und besonders bevorzugt im Bereich von 30% bis 50% der Fläche des freien Strömungsquerschnitts der Messröhre 100 an dem ersten Ende 110 liegt. Speziell bevorzugt beträgt die Fläche des freien Strömungsquerschnitts an dem Konditionierungselement 71 ungefähr 44% der Fläche des freien Strömungsquerschnitts der Messröhre 100 an dem ersten Ende 110.

Der bevorzugte Bereich für die Länge L des Konditionierungselements 71 in Strömungsrichtung A hängt von mehreren Faktoren ab, beispielsweise vom Innendurchmesser RI des Konditionierungselements 71, oder vom Verhältnis aus dem Innendurchmesser RI des Konditionierungselements 71 und dem Innendurchmesser RS der Messröhre 100 am ersten Ende 110, oder von dem freien Strömungsquerschnitt an dem Konditionierungselements 71, oder von dem Verhältnis aus dem freien Strömungsquerschnitt an dem Konditionierungselement 71 und dem freien Strömungsquerschnitt der Messröhre 100 an dem ersten Ende 110.

In der Praxis hat es sich beispielsweise bewährt, dass die Länge L des Konditionierungselements 71 in Strömungsrichtung A im Bereich von 3% bis 75% des Innendurchmessers RI des Konditionierungselements 71 liegt, bzw. im Bereich von 3% bis 75% einer charakteristischen Strecke, welche den freien Strömungsquerschnitt an dem Konditionierungselement 71 beschreibt.

Beispielsweise ist die Länge L des Konditionierungselements 71 in Strömungsrichtung A etwa 6% des Innendurchmessers RI des Konditionierungselements 71.

Das Konditionierungselement 71 kann -wie beispielsweise in Fig. 3 gezeigt- als ein ringförmiges Konditionierungselement 71 ausgestaltet sein. Es versteht sich, dass diese ringförmige Ausgestaltung beispielhaft zu verstehen ist. Es sind durchaus auch andere Geometrien des Konditionierungselements 71 möglich. So kann das Konditionierungselement 71 beispielsweise konisch ausgestaltet sein, derart dass sich sein Innendurchmesser RI in Strömungsrichtung A gesehen verkleinert. Auch sind Ausgestaltungen möglich, bei denen die innere Querschnittsfläche des Konditionierungselements 71, welche den freien Strömungsquerschnitt festlegt, nicht kreisförmig ausgestaltet ist, sondern polygonal, beispielsweise hexagonal. Ferner sind auch konisch polygonale Ausgestaltungen des Strömungskanals 150 im Konditionierungselement 71 möglich oder doppelkonische Ausgestaltungen.

Ferner ist es möglich, dass in der Messröhre 100 eine Vielzahl von gleichen oder verschiedenen Konditionierungselementen 71 vorgesehen ist, welche in Strömungsrichtung A gesehen hintereinander angeordnet sind. Auch ist es möglich, zusätzlich im zweiten Anschluss 125 ein oder mehrere Konditionierungselemente 71 vorzusehen, sodass die Messröhre 100 in beiden Richtungen durchströmt werden kann.

Im Folgenden werden anhand der Fig. 4 bis Fig. 9 verschiedene Varianten für die Ausgestaltung von Konditionierungselementen beschrieben. Es versteht sich, dass diese Varianten auch miteinander kombinierbar sind, und dass diese Varianten auch mit der in Fig. 3 dargestellten Ausführungsform kombinierbar sind.

Fig. 4 zeigt den ersten Anschluss 115 der Messröhre 100 mit einer Variante, bei der die Konditionierungseinrichtung 7 ein Konditionierungselement 72 umfasst, dass als eine ringförmige Vertiefung ausgestaltet ist, welche sich in Umfangsrichtung entlang der inneren Oberfläche 102 der Messröhre 100 erstreckt, sodass der freie Strömungsquerschnitt des Strömungskanals 150 der Messröhre 100 an dem Konditionierungselement 72 grösser ist als am ersten Ende 110 der Messröhre 100.

Das Konditionierungselement 72 ist hier als eine Vertiefung, beispielsweise als eine ringförmige Ausnehmung, in der inneren Oberfläche 102 der Wandung 101 ausgestaltet mit einem Aussendurchmesser RA, wobei der Aussendurchmesser RA grösser ist als der Innendurchmesser RS der Messröhre 100 an ihrem ersten Ende 110. In Strömungsrichtung A gesehen hat das Konditionierungselement 72 eine Länge LA. Das Konditionierungselement 72 kann beispielsweise mit einem subtraktiven Bearbeitungsverfahren, z.B. Fräsen, in der inneren Oberfläche 102 erzeugt werden. Natürlich ist es auch möglich, dass das Konditionierungselement 72 als integraler Bestandteil des ersten Anschlusses 115 in einem Spritzgiessverfahren mit einem geeignet geformten Spritzwerkzeug hergestellt wird

Fig. 5 zeigt eine weitere Variante für den ersten Anschluss 115 der Messröhre 100, bei welcher in sinngemäss gleicher Weise wie dies anhand von Fig. 3 beschrieben ist, das ringförmige Konditionierungselement 71 vorgesehen ist, welches im Strömungskanal 150 angeordnet ist. Bei der in Fig. 5 dargestellten Variante ist jedoch der Strömungskanal 150 im ersten Anschluss 115 doppelkonisch ausgestaltet, derart dass sich der Strömungskanal 150 vom ersten Ende 110 des ersten Anschlusses 115 in Strömungsrichtung A gesehen zunächst bis zu dem Konditionierungselement 71 konisch verjüngt und sich dann stromabwärts des Konditionierungselements 71 wieder erweitert. Der freie Strömungsquerschnitt ist im Bereich des Konditionierungselements 71 minimal und durch den Innendurchmesser des Konditionierungselements 71 bestimmt.

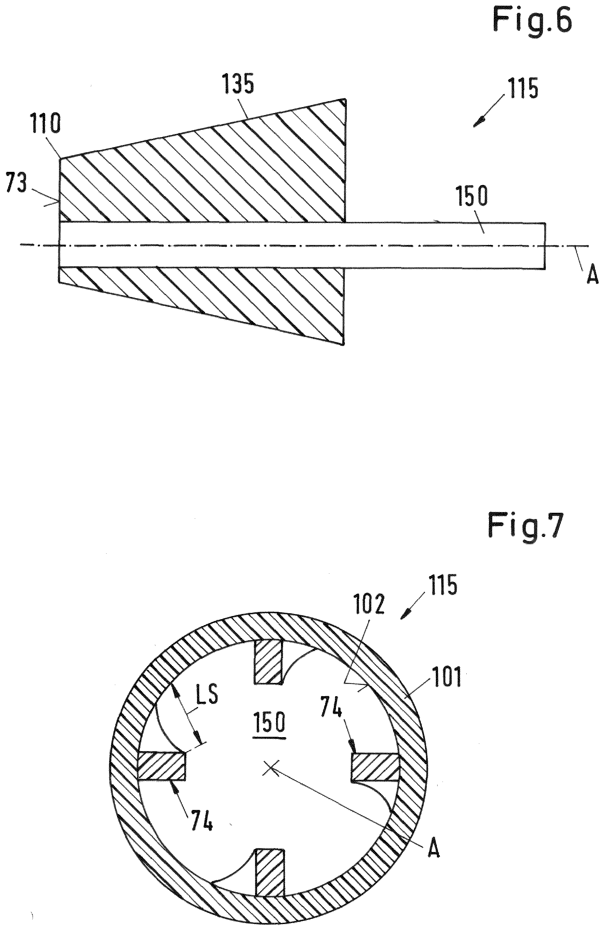

Fig. 6 zeigt eine Variante bei welcher die Konditionierungseinrichtung 7 den ersten Anschluss 115 der Messröhre 110 umfasst. Bei dieser Variante ist der konische Bereich 135 des ersten Anschlusses 115 mit einer Prallfläche als Konditionierungselement 73 ausgestaltet. Das Konditionierungselement 73 ist hier die Prallfläche, welche das erste Ende 110 des ersten Anschlusses 115 der Messröhre 100 bildet. Dazu ist der konische Bereich 135 des ersten Anschlusses 115 so ausgestaltet, dass er die ausgeprägte Prallfläche bildet, welche im Betriebszustand von dem Fluid angeströmt wird. Diese Prallfläche sorgt als Konditionierungselement 73 für eine Wirbelbildung im Fluid, sodass eine laminare Strömung des Fluids durch das Einwirken der Prallfläche in eine turbulente Strömung umschlägt. Vorzugsweise ist der Strömungskanal 150 bezüglich der Prallfläche exzentrisch angeordnet. Die als Konditionierungselement 73 ausgestaltete Prallfläche, welche den konischen Bereich 135 des ersten Anschlusses 115 senkrecht zur Strömungsrichtung A begrenzt ist eine Kreisfläche. Bezüglich dieser Kreisfläche ist der Strömungskanal 150 exzentrisch angeordnet. Auch die hierdurch verursachte Asymmetrie fördert das Umschlagen in eine turbulente Strömung des Fluid.

Fig. 7 zeigt einen Querschnitt durch den ersten Anschluss 115 der Messröhre 100 senkrecht zur Strömungsrichtung A für eine weitere Variante. Bei dieser Variante sind an der inneren Oberfläche 102 der Wandung 101 mehrere Konditionierungselemente 74 - hier vier Konditionierungselemente 74 - vorgesehen, von denen jedes als ein Steg der Länge LS ausgestaltet ist, der von der inneren Oberfläche 102 in den Strömungskanal 150 hineinreicht. In Strömungsrichtung A gesehen ist jeder der Stege gekrümmt ausgestaltet um zusätzlich eine Rotation des Fluids im Strömungskanal zu bewirken.

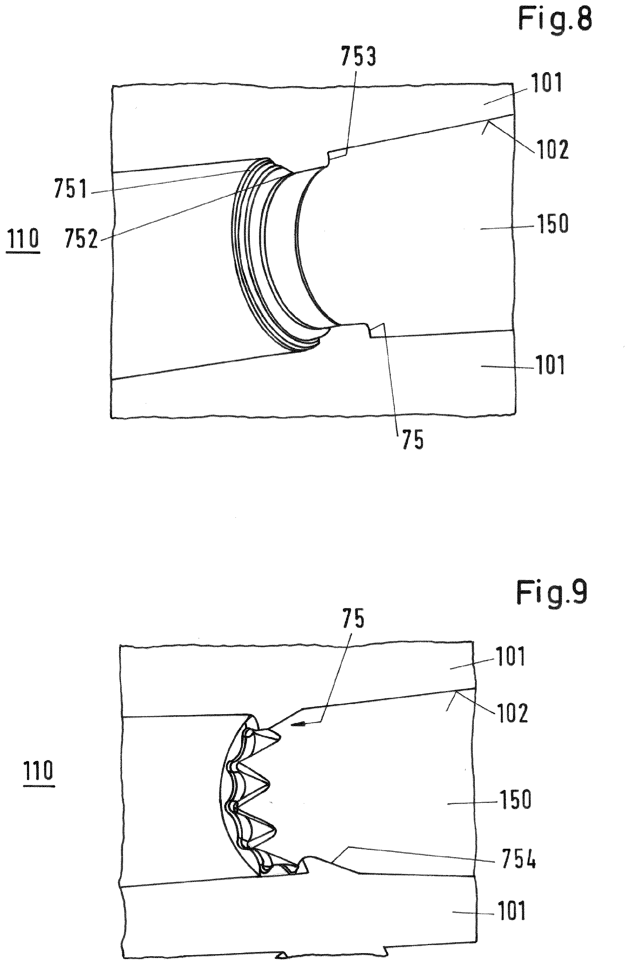

In Fig. 8 und Fig. 9 sind zwei weitere Varianten für Konditionierungselemente 75 dargestellt, die in sinngemäss gleicher Weise wie im Zusammenhang mit Fig. 3 und Fig. 4 beschrieben als ringförmige Erhebung ausgestaltet sind, welche sich jeweils in Umfangsrichtung entlang der inneren Oberfläche 102 der Wandung 101 der Messröhre 100 erstrecken, sodass der freie Strömungsquerschnitt im Bereich der Konditionierungselemente 75 verkleinert ist. Bei diesen Varianten ist das in Strömungsrichtung A gesehene Profil des jeweiligen Konditionierungselements 75 nicht mehr rechteckig wie in Fig. 3 oder Fig. 4 ausgestaltet.

Bei der in Fig. 8 dargestellten Variante ist das Profil auf der dem ersten Ende 110 zugewandten Seite abgestuft mit zwei Stufen 751 und 752 ausgestaltet und auf der anderen Seite als Wand 753, die sich rechtwinklig zur inneren Oberfläche 102 erstreckt.

Bei der in Fig. 9 dargestellten Variante ist die ringförmige Erhebung in Form einer Vielzahl von Riblets 754 ausgestaltet.

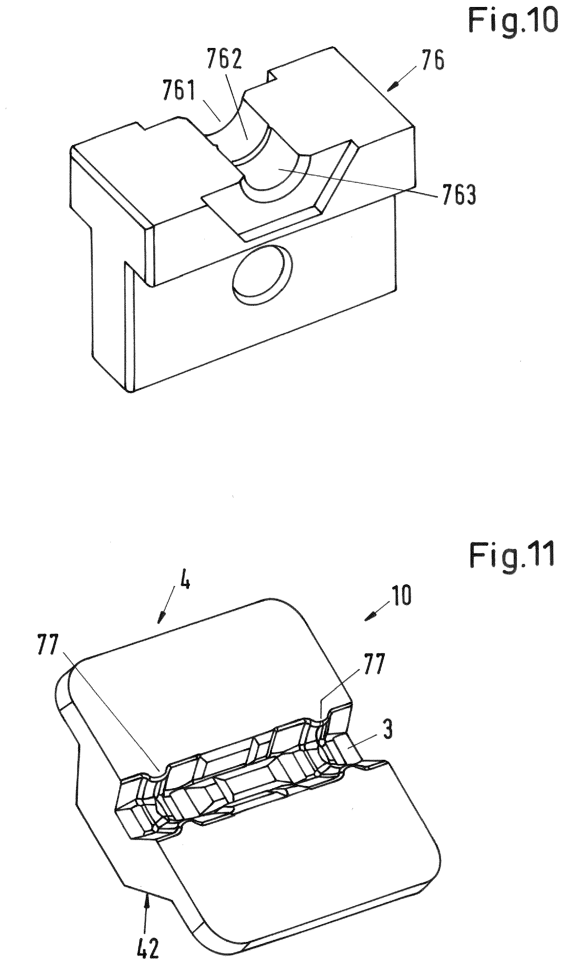

Anhand der Fig. 10-18 werden nun weitere Varianten für die Ausgestaltung der Konditionierungseinrichtung 7 zum Einwirken auf das Fluid beschrieben, mit denen eine laminare Strömung des Fluids in eine turbulente Strömung des Fluids umgewandelt werden kann.

Bei der in Fig. 10 gezeigten Variante ist die Konditioniereinrichtung 7 als eine Quetscheinrichtung ausgestaltet, von der in Fig. 10 zum besseren Verständnis nur eine erste Hälfte 76 dargestellt ist. Die zweite Hälfte ist identisch ausgestaltet und kann beispielsweise über eine nicht dargestellte gelenkige Verbindung mit der ersten Hälfte 76 verbunden sein. Die Quetscheinrichtung umfasst einen zentralen Kanal 761, der im Wesentlichen zylindrisch und für die Aufnahme der Leitung 200 oder der Messröhre 100 ausgestaltet ist. An dem zentralen Kanal 761 ist ein Prägeelement 762 vorgesehen, welches sich in Umfangsrichtung vollständig entlang der den zentralen Kanal 761 begrenzenden Wand 763 erstreckt, und in den zentralen Kanal 761 hineinreicht. Das Prägeelement 762 dient dazu, die Wandung 101 der Messröhre 100 zu deformieren, um so eine lokale Einschnürung im Strömungskanal 150 der Messröhre 100 zu erzeugen. In sinngemäss gleicher Weise wie beispielsweise für das Konditionierungselement 71 in Fig. 3 beschrieben, bewirkt diese durch das Prägeelement 762 hervorgerufenen Deformation der Wandung 101 der Messröhre 100 eine lokale Verkleinerung des freien Strömungsquerschnitts und damit die Umwandlung in eine turbulente Fluidströmung. Die Messröhre 100 wird in den zentralen Kanal 761 eingelegt, und durch Verbinden der nicht dargestellten zweiten Hälfte mit der ersten Hälfte 76 deformiert das Prägeelement 762 die Wandung 101 der Messröhre.

Für die Ausgestaltung des Prägeelements 762 gibt es dabei vielfältige Möglichkeiten. Das Prägeelement 762 kann scharfkantig oder verrundet oder rotationssymmetrisch oder asymmetrisch oder mit kreisringförmigem Querschnitt oder mit einem polygonalen Querschnitt ausgestaltet sein, um nur ein paar Beispiele zu nennen.

Fig. 11 zeigt eine Variante, bei welcher die Konditionierungseinrichtung 7 in die Ultraschall-Messvorrichtung 10 integriert ist. Diese Variante ist insbesondere für solche Ultraschall-Messvorrichtungen 10 geeignet, die als Klemmvorrichtung für eine Klemmverbindung mit der Leitung 200 bzw. mit der Messröhre 100 ausgestaltet sind, also beispielsweise für die Ultraschall-Messvorrichtung 10, die in Fig. 2 veranschaulicht ist. Die Konditionierungseinrichtung 7 umfasst bei der in Fig. 11 dargestellten Variante mindestens einen Vorsprung 77, der sich derart in den von der zentralen Ausnehmung 3 gebildete Messkanal hinein erstreckt, dass der Vorsprung 77 im geschlossenen Zustand des Gehäuses 4 die Wandung 101 der Messröhre 100 deformiert und somit den freien Strömungsquerschnitt in der Messröhre 100 lokal reduziert. Vorzugsweise umfasst die Konditioniereinrichtung 7 - wie in Fig. 11 dargestellt - mindestens zwei Vorsprünge 77 wobei einer der Vorsprünge 77 stromaufwärts der Messstrecke angeordnet ist und der andere Vorsprung 77 stromabwärts der Messstrecke. Dies hat den Vorteil, dass die Ultraschall-Messvorrichtung 10 mit zwei unterschiedlichen Strömungsrichtungen A betrieben werden kann, die einander entgegengesetzt gerichtet sind.

Als weitere Variante können die Vorsprünge 77 auch an einem separaten Einsatz vorgesehen sein, welcher in die Ultraschall-Messvorrichtung 10 eingelegt oder eingesetzt wird.

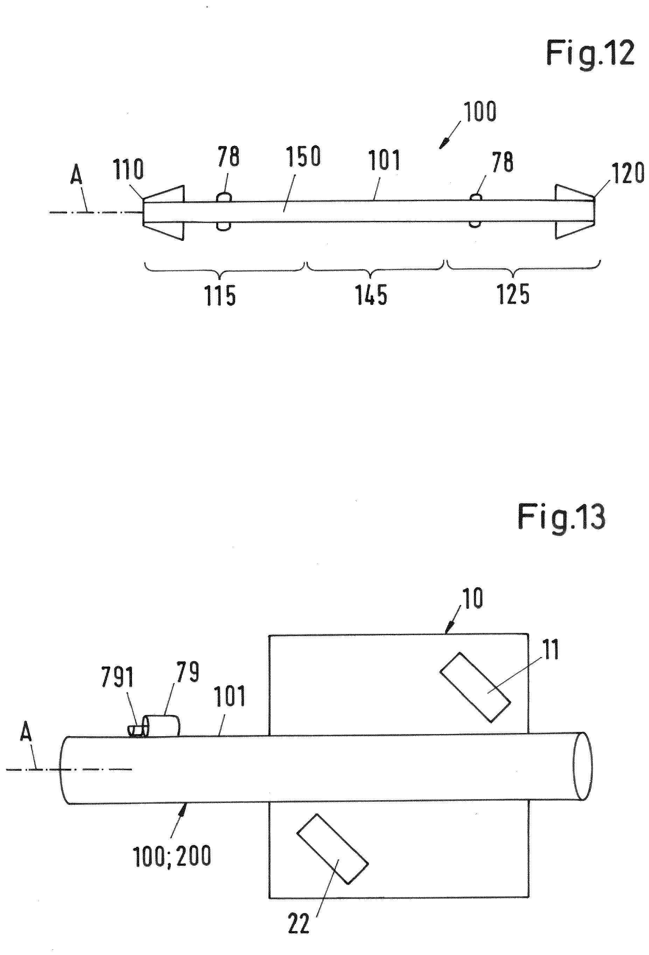

Fig. 12 zeigt eine Variante, bei welcher die Konditionierungseinrichtung aussen an der Messröhre 100 vorgesehen ist. Dazu umfasst die Messröhre 100 mindestens eine Verdickung 78, die stromaufwärts des Messbereichs 145 am ersten Anschluss 115 der Messröhre vorgesehen ist. Die Verdickung 78 ist wulstförmig auf der äusseren Oberfläche der Wandung 101 vorgesehen, und erstreckt sich in Umfangsrichtung vollständig um die Messröhre 100 herum. Wird diese Variante der Messröhre 100 dann beispielsweise in die zentrale Ausnehmung 3 der in Fig. 2 gezeigten Ultraschall-Messvorrichtung 10 eingelegt und deren Gehäuse 4 verschlossen, so wird die Verdickung 78 nach innen in den Strömungskanal 150 gedrückt und führt zu einer lokalen Reduzierung des freien Strömungsquerschnitts in der Messröhre 100. Vorzugsweise ist auch an dem zweiten Anschluss 125 der Messröhre 100 eine Verdickung 78 vorgesehen, sodass eine der Verdickungen 78 stromaufwärts des Messbereichs 145 angeordnet ist und die andere Verdickung 78 stromabwärts des Messbereichs 145. Somit kann die Messröhre 100 mit zwei unterschiedlichen Strömungsrichtungen betrieben werden.

Eine weitere bevorzugte Ausgestaltung der Konditionierungseinrichtung 7 besteht darin, der Messröhre 100 bzw. der Leitung 200 stromaufwärts der Messstrecke von aussen mechanisch eine Bewegung oder eine Deformation aufzuzwingen, die sich dann auf das in der Leitung 200 bzw. in der Messröhre 100 strömende Fluid überträgt, dieses in eine zusätzliche Bewegung versetzt, und dadurch ein Umschlagen der Fluidströmung von laminar nach turbulent verursacht.

Fig. 13 zeigt eine Variante, bei welcher die Konditionierungseinrichtung 7 einen Motor 79 umfasst, beispielsweise einen Elektromotor 79, der eine Unwucht 791 zur Rotation antreibt, wobei die Unwucht 791 auf der äusseren Oberfläche der Wandung 101 der Messstrecke 100 oder auf der Leitung 200 vorgesehen ist, sodass die Unwucht periodische Deformationen oder Schwingungen in der Leitung 200 bzw. der Messröhre 100 verursacht. Die Vibrationsfrequenz, die von dem Motor 79 generiert wird kann beispielsweise im Bereich von 100 Hz liegen. Die Amplitude der Vibration kann kleiner als ein Millimeter sein, beispielsweise etwa 0.5mm.

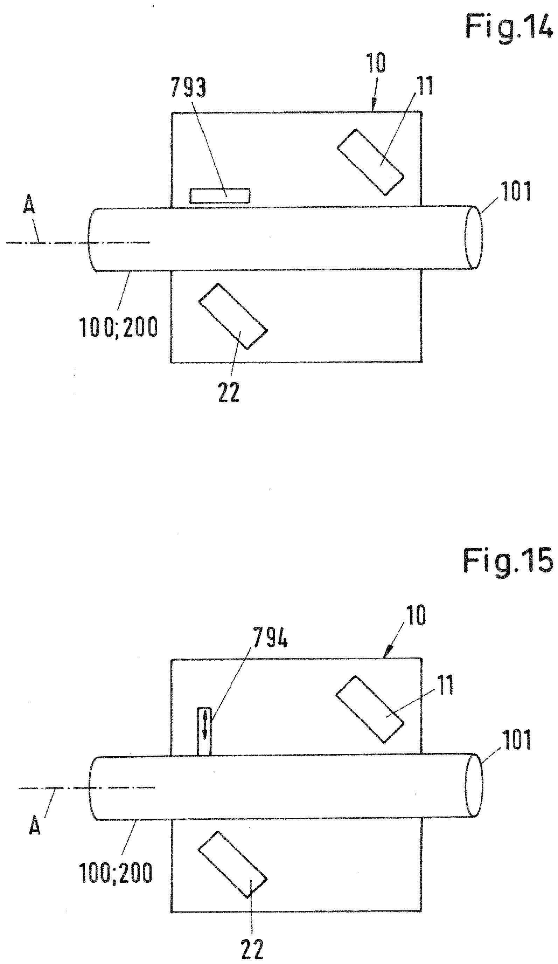

Bei der in Fig. 14 dargestellten Variante umfasst die Konditionierungseinrichtung 7 einen piezoelektrischen Schwinger 793, welcher die Leitung 200 bzw. die Messröhre 100 mit Druckimpulsen beaufschlagt, die sich auf das Fluid fortpflanzen.

Bei der in Fig. 15 dargestellten Variante ist ein Stempel 794 vorgesehen, welcher über eine Hin- und Herbewegung eine periodische Kraft auf die Leitung 200 bzw. auf die Messröhre 100 ausübt, die sich auf das in der Leitung 200 bzw. in der Messröhre 100 strömende Fluid überträgt. Die Bewegung des Stempels 794, die in Fig. 15 durch den Doppelpfeil ohne Bezugszeichen angedeutet ist, erfolgt vorzugsweise senkrecht zur Strömungsrichtung A.

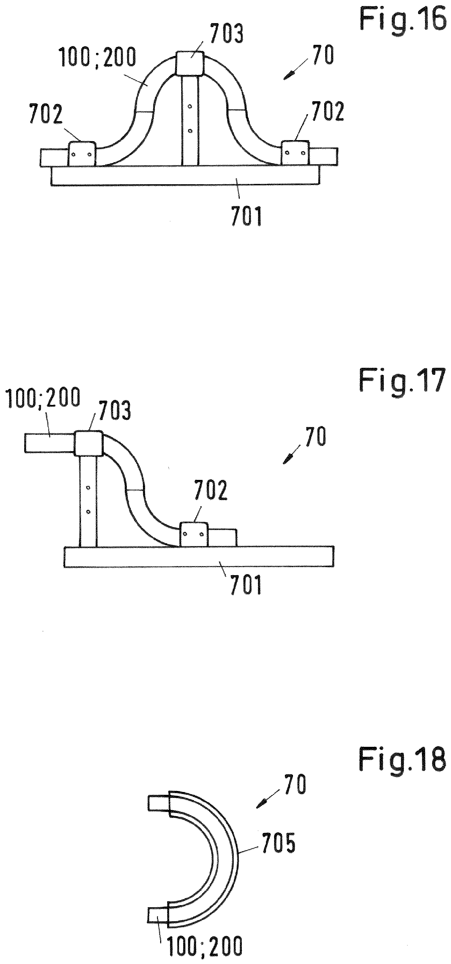

Eine weitere Variante für die Ausgestaltung der Konditionierungseinrichtung 7 besteht darin, dass die Konditionierungseinrichtung 7 ein Führungselement 70 zum Führung der Leitung 200 und/oder der Messröhre 100 stromaufwärts der Messstrecke umfasst, wobei das Führungselement 70 Umlenkungen, wie beispielsweise Biegungen, der Leitung 200 bzw. der Messröhre 100 verursacht, welche einen Übergang vom Bereich der laminaren Strömung in den Bereich der turbulente Strömung hervorrufen. Solche Varianten sind in den Fig. 16-18 gezeigt.

Fig. 16 zeigt eine Variante, bei welcher das Führungselement 70 eine Grundplatte 701 umfasst, sowie zwei laterale Führungen 702 und eine transversale Führung 703, welche auf der Grundplatte 701 angeordnet und befestigt sind. Jede Führung 702, 703 ist derart zur lösbaren Verbindung mit der Leitung 200 oder der Messröhre 100 ausgestaltet, dass sie die Leitung 200 bzw. die Messröhre 100 fest umschliessen kann, sodass sich die Leitung 200 / die Messröhre 100 relativ zu der jeweiligen Führung 702, 703 nicht oder zumindest nicht wesentlich bewegen kann. Die transversale Führung 703 ist zwischen den beiden lateralen Führungen 702 angeordnet. Die beiden lateralen Führungen 702 sind in Richtung der Längserstreckung der Leitung 200 / der Messröhre 100 hin und her verschiebbar, wie dies die Doppelpfeile in den beiden lateralen Führungen 702 andeuten. Die transversale Führung 703 ist senkrecht zur Längserstreckung der Leitung 200 / der messröhre 100 hin und her verschiebbar, wie dies der Doppelpfeil in der transversalen Führung 703 andeutet. Zudem ist jeder Führung 702, 703 arretierbar.

Wie dies Fig. 16 zeigt, wird die in die Führungen 702, 703 eingelegte Leitung 200 / Messröhre 100 durch das Führungselement 70 insgesamt um 180° umgelenkt. Die verschiedenen Biegeradien lassen sich dabei mittels den beiden lateralen Führungselementen 702 und dem transversalen Führungselement 703 einstellen. Durch das Einstellen der Umlenkung der Leitung 200 / Messröhre 100 kann die Strömung des Fluids in der Leitung 200 / Messröhre 100 aus dem laminaren in den turbulenten Bereich gebracht werden.

In der Praxis hat es sich gezeigt, dass der Biegeradius, mit welchem die Leitung 200 / Messröhre 100 umgelenkt wird vorzugsweise kleiner sein sollte als das Zehnfache des Innendurchmessers der Leitung 200 / Messröhre 100.

Fig. 17 zeigt eine Variante, bei welcher das Führungselement 70 nur eine laterale Führung 702 und die transversale Führung 703 umfasst, die auf der Grundplatte 701 angeordnet sind. Wie dies Fig. 17 zeigt, wird die in die Führungen 702, 703 eingelegte Leitung 200 / Messröhre 100 durch das Führungselement 70 insgesamt um 90° umgelenkt. Die Biegeradien lassen sich dabei mittels des lateralen Führungselements 702 und des transversalen Führungselement 703 einstellen.

Fig. 18 zeigt eine Variante für das Führungselement 70, bei welchem das Führungselement 70 eine starre Schiene 705 umfasst, in welche die Leitung 200 / Messröhre 100 eingelegt wird, sodass die Schiene 705 die Leitung 200/ Messröhre 100 führt. Bei der in Fig. 18 dargestellten Variante ist die Schiene 705 mit beispielhaftem Charakter für eine Umlenkung um 180° ausgestaltet.

Fig. 19 zeigt in einer perspektivischen Darstellung ein zweites Ausführungsbeispiels eines erfindungsgemässen Ultraschall-Messsystems 1. Bei der folgenden Beschreibung des zweiten Ausführungsbeispiels wird nur auf die Unterschiede zu dem ersten Ausführungsbeispiel näher eingegangen. Ansonsten gelten die Erläuterungen bezüglich des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Fig. 20 zeigt in einer Schnittdarstellung eine Ausführungsform der Messröhre 100, die insbesondere für das zweite Ausführungsbeispiel geeignet ist.

Ein wesentlicher Unterschied zu dem ersten Ausführungsbeispiel besteht darin, dass bei dem zweiten Ausführungsbeispiel die Messröhre 100 und die Ultraschall-Messvorrichtung 10 so ausgestaltet sind, dass sich die Messstrecke parallel zur Strömungsrichtung erstreckt.

Ein derartiges Ultraschall-Messsystem 1 bei welchem die Messstrecke parallel zur Strömungsrichtung verläuft, wird beispielsweise in der EP 3 770 561 A1 beschrieben. Dort wird insbesondere auch beschrieben, wie Komponenten des Ultraschall-Messsystems 1 als Einmalvorrichtung ausgestaltet werden können, die mit einer wiederverwendbaren Vorrichtung zusammengefügt werden, um das Ultraschall-Messsystem 1 zu erhalten.

Fig. 20 zeigt die Messröhre 100 mit dem ersten Anschluss 115, dem zweiten Anschluss 125 und dem dazwischen angeordneten Messbereich 145. Die Strömung des Fluids durch die Messröhre 100 ist mit den Pfeilen ohne Bezugszeichen angedeutet.

In der Messröhre 100 sind eine erste Kammer 403 und eine zweite Kammer 404 vorgesehen, wobei in der ersten Kammer 403 der erster Ultraschallwandler 11 angeordnet ist und in der zweiten Kammer 404 der zweite Ultraschallwandler 22, welche die Messstrecke festlegen, die parallel zur Strömungsrichtung A verläuft. Die Ultraschallwandler 11, 22 sind auf der Mittelachse der Messröhre 100 derart angeordnet und ausgerichtet, dass der erste Ultraschallwandler 11 das erste Messsignal 12 parallel zur und in der Strömungsrichtung A des Fluids an den zweiten Ultraschallwandler 22 aussenden kann, und das von dem zweiten Ultraschallwandler 22 entgegengesetzt zur Strömungsrichtung A ausgesendetes zweites Messsignal 21 empfangen kann.

Der erste Ultraschallwandler 11 und der zweite Ultraschallwandler 22 begrenzen somit die geradlinige Messstrecke, welche sich zwischen den beiden Ultraschallwandlern 11, 22 befindet.

Die erste Kammer 403 und die zweite Kammer 404 sind in der Messröhre 100 zwischen dem ersten Anschluss 115 und dem zweiten Anschluss 125 angeordnet, wobei die erste Kammer 403 näher ersten Anschluss 115 angeordnet ist, und die zweite Kammer 404 näher am zweiten Anschluss 125 der Messröhre 100. Die erste Kammer 403 und die zweite Kammer 404 sind jeweils so ausgestaltet und angeordnet, dass jede der beiden Kammern 403 und 404 von dem Fluid umströmbar ist und das Fluid nicht in die erste und zweite Kammer 403 bzw. 404 eindringen kann, sodass die Ultraschallwandler 11, 22 nicht mit dem Fluid im Kontakt kommen.

Bei dem zweiten Ausführungsbeispiel umfasst die Konditioniereinrichtung 7 ein Verwirbelungselement 700, welches an der ersten Kammer 403 vorgesehen ist, nämlich an der Seite der ersten Kammer 403, welche dem ersten Anschluss 115 zugewandt ist. Das Verwirbelungselement 700, das entweder eine separate Komponente ist oder einstückig mit der ersten Kammer 403 ausgebildet ist teilt den Fluidstrom in Strömungsrichtung A gesehen an der ersten Kammer 403 in zwei Teilströme S1 und S2 auf, von denen einer, nämlich der Teilstrom S1, darstellungsgemäss oberhalb der ersten Kammer 403 herum geführt wird, und der andere, nämlich der Teilstrom S2, darstellungsgemäss unterhalb der ersten Kammer 403 herum geführt wird. Das Verwirbelungselement 700 ist so ausgestaltet, dass die Strömung des Fluids entlang der Messstrecke eine turbulente Strömung ist.

Bei einer Variante des zweiten Ausführungsbeispiels sind die beiden Ultraschallwandler 11, 22 in dem Gehäuse 4 der Ultraschall-Messvorrichtung 10 angeordnet, beispielsweise derart, dass sie im geschlossenen Zustand des Gehäuses 4 darstellungsgemäss unterhalb der ersten Kammer 403 und unterhalb der zweiten Kammer 404 angeordnet sind. Bei dieser Ausführungsform sind dann beispielsweise Wellenleitelemente vorgesehen, um die Ultraschallsignale in die Kammern 403, 404 einzukoppeln bzw. aus den Kammern 403, 404 auszukoppeln.

Dies kann beispielsweise in sinngemäss gleicherweise realisiert werden, wie dies in der EP 3 770 561 A beschrieben ist.

Besonders bevorzugt ist die erfindungsgemässe Messröhre 100 bzw. die Messröhre des erfindungsgemässen Ultraschall-Messsystems 1 als Einmalteil bzw. als Einmalvorrichtung für den Einmalgebrauch ausgestaltet.

Mit dem Begriff ""Einmal" in Zusammensetzungen wie z. B. Einmalteil, Einmalkomponente usw. sind dabei solche Komponenten bzw. Teile gemeint, die für den Einmalgebrauch ausgestaltet sind, die also bestimmungsgemäss nur ein einziges Mal benutzt werden können und dann entsorgt werden. Für eine neue Anwendung muss dann ein neues, bisher unbenutztes Einmalteil eingesetzt werden. Bei der Konzipierung bzw. der Ausgestaltung der Einmalteile sind es daher wesentliche Aspekte, dass die Einmalteile, z.B. die Messröhre 100, möglichst einfach und wirtschaftlich herstellbar sind, wenige Kosten verursachen und aus möglichst preisgünstig erhältlichen Materialen herstellbar sind. Ein anderer Aspekt ist es, dass die Einmalteile in möglichst einfacher Weise mit anderen Komponenten, welche für den Mehrfachgebrauch ausgelegt sind, also wiederverwendbar sind, zusammenfügbar sind. Die Einmalteile sollen also in sehr einfacher Weise ersetzt werden können, ohne dass dafür ein hoher Montageaufwand notwendig ist. Auch ist es ein wichtiger Aspekt, dass die Einmalteile nach ihrem Gebrauch möglichst einfach zu entsorgen sind. Daher werden solche Materialien für die Einmalteile bevorzugt, die eine möglichst geringe Umweltbelastung, insbesondere auch bei der Entsorgung mit sich bringen.

Noch ein weiterer Aspekt ist es, dass die Einmalteile für gewisse Anwendungsbereiche sterilisierbar sein sollen. Dabei ist es besonders vorteilhaft, wenn die Einmalteile, also beispielsweise die Messröhre 100, gamma-sterilisierbar sind. Bei dieser Art der Sterilisierung wird das zu sterilisierende Element mit Gamma-Strahlung beaufschlagt. Der Vorteil der Gamma-Sterilisierung, beispielsweise im Vergleich zur Dampfsterilisierung, liegt insbesondere darin, dass die Sterilisierung auch durch die Verpackung hindurch erfolgen kann. Gerade bei Einmalteilen ist es eine gängige Praxis, dass die Teile nach ihrer Herstellung in die Verpackung gebracht werden und dann noch eine Zeit lagern, bevor sie an den Kunden ausgeliefert werden. In solchen Fällen erfolgt die Sterilisierung durch die Verpackung hindurch, was bei einer Dampfsterilisierung oder anderen Verfahren nicht möglich ist.

**Patentansprüche**

1. Ultraschall-Messsystem zur Messung an einem in einer Leitung strömenden Fluid, mit einer Messröhre (100), welche von dem Fluid in einer Strömungsrichtung (A) durchströmbar ist, sowie mit einer Ultraschall-Messvorrichtung (10), welche zur Ermittlung eines Durchflusses des Fluids durch die Messröhre (100) ausgestaltet ist, wobei die Ultraschall-Messvorrichtung (10) einen ersten Ultraschallwandler (11) und einen zweiten Ultraschallwandler (22) umfasst, die eine Messstrecke festlegen, wobei die Ultraschallwandler (11, 22) derart angeordnet und ausgerichtet sind, dass sie Messsignale (12, 21) entlang der Messstrecke miteinander austauschen können, und wobei die Messröhre (100) bezüglich der Ultraschall-Messvorrichtung (10) so angeordnet ist, dass die Messstrecke durch die Messröhre (100) verläuft, **dadurch gekennzeichnet, dass** stromaufwärts der Messstrecke eine Konditionierungseinrichtung (7) zum Einwirken auf das Fluid vorgesehen ist, wobei die Konditionierungseinrichtung (7) derart ausgestaltet ist, dass sie eine laminare Strömung des Fluids in eine Strömung umwandelt, welche entlang der Messstrecke turbulent ist.

2. Ultraschall-Messsystem nach Anspruch 1, wobei die Konditionierungseinrichtung (7) an der Messröhre (100) vorgesehen ist.

3. Ultraschall-Messsystem nach einem der vorangehenden Ansprüche, bei welchem die Leitung (200) die Messröhre (100) bildet.

4. Ultraschall-Messsystem nach einem der Ansprüche 1-2, bei welchem die Messröhre (100) als von der Leitung (200) verschiedene Komponente ausgestaltet ist, wobei sich die Messröhre (100) von einem ersten Ende (110) bis zu einem zweiten Ende (120) erstreckt, wobei die Messstrecke bezüglich der Strömungsrichtung (A) zwischen dem ersten Ende (110) und dem zweiten Ende (120) der Messröhre (100) liegt, und wobei die Messröhre (100) an ihrem ersten Ende (110) einen ersten Anschluss (115) aufweist, welcher zur Verbindung mit der Leitung (200) ausgestaltet ist, und an ihrem zweiten Ende (120) einen zweiten Anschluss (125) aufweist, welcher zur Verbindung mit der Leitung (200) ausgestaltet ist.

5. Ultraschall-Messsystem nach Anspruch 4, bei welchem die Konditionierungseinrichtung (7) ein Konditionierungselement (71, 72, 74, 75) umfasst, das im Inneren der Messröhre (100) zwischen dem ersten Ende (110) und dem zweiten Ende (120) vorgesehen ist.

6. Ultraschall-Messsystem nach einem der Ansprüche 4-5, wobei die Konditionierungseinrichtung (7) eine ringförmige Erhebung umfasst, welche sich in Umfangsrichtung entlang einer inneren Oberfläche (102) der Messröhre erstreckt, sodass ein freier Strömungsquerschnitt der Messröhre (100) an der ringförmigen Erhebung kleiner ist, als am ersten Ende der Messröhre.

7. Ultraschall-Messsystem nach einem der Ansprüche 4-6, wobei die Konditionierungseinrichtung (7) eine ringförmige Vertiefung umfasst, welche sich in Umfangsrichtung entlang einer inneren Oberfläche (102) der Messröhre erstreckt, sodass ein freier Strömungsquerschnitt der Messröhre an der ringförmigen Vertiefung grösser ist, als am ersten Ende der Messröhre.

8. Ultraschall-Messsystem nach einem der Ansprüche 4-7, wobei die Konditionierungseinrichtung (7) ein Konditionierungselement (73) umfasst, das am ersten Anschluss (115) der Messröhre (100) vorgesehen ist.

9. Ultraschall-Messsystem nach einem der vorangehenden Ansprüche, bei welchem der erste Ultraschallwandler (11) und der zweite Ultraschallwandler (22) so angeordnet sind, dass sich die Messstrecke parallel zur Strömungsrichtung (A) erstreckt.

10. Ultraschall-Messsystem nach einem der Ansprüche 1-8, bei welchem der erste Ultraschallwandler (11) im Betriebszustand lateral auf einer ersten Seite (51) der Messröhre (100) angeordnet ist, und der zweite Ultraschallwandler (22) im Betriebszustand lateral auf einer zweiten Seite (52) der Messröhre (100) angeordnet ist, wobei die zweite Seite (52) der ersten Seite (51) gegenüberliegt, und wobei die Ultraschallwandler (11, 22) derart angeordnet und ausgerichtet sind, dass die Messstrecke schräg zu der Strömungsrichtung (A) ausgerichtet ist.

11. Ultraschall-Messsystem nach Anspruch 10, bei welchem die Ultraschall-Messvorrichtung als Klemmvorrichtung für eine Klemmverbindung mit der Messröhre (100) ausgestaltet ist, und ein schliessbares Gehäuse (4) umfasst, welches einen durchgängigen Messkanal aufweist, der zur Aufnahme der Messröhre (100) ausgestaltet ist, wobei das Gehäuse (4) derart zur lösbaren Befestigung an der Leitung (200) oder an der Messröhre (100) ausgestaltet ist, dass im geschlossenen Zustand des Gehäuses (4) der Messkanal die Messröhre (100) aufnehmen und bezüglich des Gehäuses (4) fixieren kann, wobei die Konditionierungseinrichtung (7) mindestens einen Vorsprung (77) umfasst, welcher sich derart in den Messkanal hinein erstreckt, dass der Vorsprung (77) zumindest im geschlossenen Zustand des Gehäuses (4) den freien Strömungsquerschnitt der Messröhre (100) durch eine Deformation der Messröhre (100 lokal reduziert.

12. Ultraschall-Messsystem nach Anspruch 11, bei welchem die Konditionierungseinrichtung (7) zwei Vorsprünge (77) umfasst, von denen sich jeder derart in den Messkanal hinein erstreckt, dass er zumindest im geschlossenen Zustand des Gehäuses (4) den freien Strömungsquerschnitt der Messröhre (100) durch eine Deformation der Messröhre (100) lokal reduziert, wobei einer der beiden Vorsprünge (77) stromaufwärts der Messstrecke angeordnet ist, und der andere der beiden Vorsprünge (77) stromabwärts der Messstrecke.

13. Ultraschall-Messsystem nach einem der vorangehenden Ansprüche, bei welchem die Konditionierungseinrichtung (7) ein Führungselement (70) zum Führen der Leitung (200) umfasst, wobei das Führungselement (70) zum Umlenken der Leitung, vorzugsweise um mindestens 90°, ausgestaltet ist.

14. Messröhre für ein Ultraschall-Messsystem, **dadurch gekennzeichnet, dass** die Messröhre (100) für ein Ultraschall-Messsystem (1) ausgestaltet ist, welches nach einem der Ansprüche 1, 2 oder 4-13 ausgestaltet ist.

15. Messröhre nach Anspruch 14, welche als Einmalteil für den Einmalgebrauch ausgestaltet ist.

Fig.1

Fig.2

## Fig.3

## Fig.4

# Fig.5

Fig.6

135

110

73

115

150

A

Fig.7

115

102

101

LS

150

74

74

A

**Fig.8**

**Fig.9**

Fig.10

761    762    76

763

Fig.11

4    10

77    77

3

42

## Fig.12

## Fig.13

Fig.14

Fig.15

Fig.16

703

100;200

70

702

702

701

Fig.17

100;200

703

70

702

701

Fig.18

70

705

100;200

Fig.19

Fig.20

**Europäisches Patentamt**
**European Patent Office**
**Office européen des brevets**

# EUROPÄISCHER RECHERCHENBERICHT

**Nummer der Anmeldung**

**EP 23 16 8855**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/129246 A1 (AZBIL CORP [JP]) 6. September 2013 (2013-09-06) | 1-6,8, 10,14,15 | INV. G01F1/66 |
| A | * Abbildungen 1,6,7,8,10 * | 7,11,12 | G01F1/667 G01F15/00 |
| X | DE 10 2018 009569 A1 (DIEHL METERING GMBH [DE]) 10. Juni 2020 (2020-06-10) | 1-3,10 | F15D1/00 F15D1/02 |
| A | * Absätze [0031], [0037] * * Abbildung 1 * | 12 | G01F15/18 |
| X | EP 1 876 427 A1 (LANDIS & GYR GMBH [DE]) 9. Januar 2008 (2008-01-09) * Absatz [0006] – Absatz [0016] * * Absatz [0021] – Absatz [0029] * * Abbildungen 1-7 * | 1-5,8, 10,14,15 | |
| A | US 2015/300861 A1 (REGEN THOMAS [DE] ET AL) 22. Oktober 2015 (2015-10-22) * Absatz [0032]; Abbildungen 1-6 * | 11,12, 14,15 | |
| X | JP H07 260532 A (OVAL CORP) 13. Oktober 1995 (1995-10-13) * Absatz [0022] – Absatz [0023] * * Abbildung 1 * | 1,10,13 | **RECHERCHIERTE SACHGEBIETE (IPC)** |
| X | DE 89 00 110 U1 (ISKRA-SOZD) 16. März 1989 (1989-03-16) * Absatz [0009] * * Abbildung 3 * | 1,9,13 | G01F F15D |
| A,D | EP 3 770 561 A1 (LEVITRONIX GMBH [CH]) 27. Januar 2021 (2021-01-27) * das ganze Dokument * | 9 | |

Der vorliegende Recherchenbericht wurde für alle Patentansprüche erstellt

| Recherchenort | Abschlußdatum der Recherche | Prüfer |
|---|---|---|
| Den Haag | 24. August 2023 | Verdoodt, Erik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 23 16 8855

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2023

| Im Recherchenbericht angeführtes Patentdokument | Datum der Veröffentlichung | Mitglied(er) der Patentfamilie | Datum der Veröffentlichung |
|---|---|---|---|
| WO 2013129246    A1 | 06-09-2013 | CN      104136892 A<br>JP        5815437 B2<br>JP     2013178126 A<br>KR    20140112540 A<br>WO     2013129246 A1 | 05-11-2014<br>17-11-2015<br>09-09-2013<br>23-09-2014<br>06-09-2013 |
| DE 102018009569 A1 | 10-06-2020 | DE 102018009569 A1<br>EP        3663728 A1 | 10-06-2020<br>10-06-2020 |
| EP 1876427       A1 | 09-01-2008 | DE 102006030942 A1<br>EP        1876427 A1 | 10-01-2008<br>09-01-2008 |
| US 2015300861    A1 | 22-10-2015 | CN      104903685 A<br>DE 102012111757 A1<br>EP        2898298 A1<br>US     2015300861 A1<br>WO     2014086438 A1 | 09-09-2015<br>05-06-2014<br>29-07-2015<br>22-10-2015<br>12-06-2014 |
| JP H07260532     A | 13-10-1995 | JP        3103264 B2<br>JP      H07260532 A | 30-10-2000<br>13-10-1995 |
| DE 8900110       U1 | 16-03-1989 | KEINE | |
| EP 3770561       A1 | 27-01-2021 | CN      112304374 A<br>EP        3770561 A1<br>US     2021025743 A1 | 02-02-2021<br>27-01-2021<br>28-01-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3770561 A1
- EP 3489634 A1
- EP 3816590 A1
- EP 3770561 A